# EUROPÄISCHE PATENTSCHRIFT

(11) **EP 1 607 638 B1**
(45) Veröffentlichungstag und Bekanntmachung des Hinweises auf die Patenterteilung: **28.02.2007**
(21) Anmeldenummer: 05012725.7
(22) Anmeldetag: 14.06.2005
(51) Int. Cl.: F16B 7/04, B25J 15/00, B62D 65/02, E04G 1/04

(54) **Gerüstsystem, zur Verwendung im Karosseriebau der Kfz-Industrie, und Verfahren zum Herstellen von Teilen eines derartigen Gerüstsystems**
Structure system for use in car bodywork construction and method for producing parts of such system
Structure support utilisable dans le montage de carrosserie dans l'industrie automobile, et procédé pour la fabrication d'éléments d'une telle structure

(30) Priorität: 14.06.2004 DE 102004028707
(43) Veröffentlichungstag der Anmeldung: 21.12.2005
(73) Patentinhaber: TÜNKERS MASCHINENBAU GmbH, 40880 Ratingen (DE); Schütze GmbH & Co., 38110 Braunschweig (DE)
(72) Erfinder: Tünkers, André, 40489 Düsseldorf (DE); Schütze, Eckart, 46286 Dorsten (DE)
(74) Vertreter: Beyer, Rudi

(56) Entgegenhaltungen:
- WO-A-95/16838
- DE-C2- 10 017 897
- DE-U1- 8 115 454
- US-A- 5 259 690
- PATENT ABSTRACTS OF JAPAN Bd. 016, Nr. 077 (M-1214), 25. Februar 1992 (1992-02-25) & JP 03 264336 A (SHIGERU TAKAMORI), 25. November 1991 (1991-11-25)

## Beschreibung

Die Erfindung betrifft ein Gerüstsystem zur Verwendung im Karosseriebau der Kfz-Industrie, zum Anordnen von Kniehebelspannvorrichtungen, Saugvorrichtungen, Zentrierdornen, Sensoren, Schweißvorrichtungen, Clinchvorrichtungen, Nietvorrichtungen oder dergleichen, geeignet zum Anordnen in einem Roboterarm, wobei das Gerüstsystem aus zwei oder aus mehreren an ihren Außenmantelflächen zylindrischen oder polygonförmigen Rohren besteht, die durch formmäßig angepasste Klemmschellen kraftschlüssig miteinander in unterschiedlichen Ebenen und/oder Winkeln kuppelbar sind.

Des weiteren betrifft die Erfindung ein Verfahren zum Herstellen von Teilen eines Gerüstsystems der gattungsgemäß vorausgesetzten Art.

### Stand der Technik

Ein Gerüstsystem der vorausgesetzten Gattung ist durch die DE 100 17 897 C2 vorbekannt. Sie können erhebliche Abmessungen aufweisen und recht komplex gestaltet sein, um den Anforderungen im Karosseriebau der Kfz-Industrie gerecht zu werden. Rohre und Klemmschellen können aus Stahl, aber auch aus einer Aluminiumlegierung hergestellt sein. Je nach den jeweiligen Anforderungen, also Type und Formgebung der zu bearbeitenden Karosserieteile sind auch die Abmessungen solcher Gerüstsysteme und damit auch die Gewichts- und Massenkräfte ganz erheblich, zumal die Gerüstsysteme durch einen Roboterarm in unterschiedlichen Ebenen bewegt werden müssen. Die Abmessungen und insbesondere die Massenträgheitskräfte setzen damit der Geschwindigkeit, mit der die Gerüstsysteme durch den Roboterarm bewegt werden können, eine Grenze.

Aus der DE 699 16 551 T2 sind thermoplastische Harzzusammensetzungen vorbekannt, die in ihr eingeschlossen einen Füllstoff aufweisen, um dadurch mechanische Festigkeit und andere charakteristische Eigenschaften zu verleihen. Der Füllstoff kann faserig, plattenförmig, pulverig, körnchenförmig oder nicht-faserartig sein. Es werden als typische Beispiele dafür Glasfasern, Kohlefasern, Metallfasern, organische Fasern, faserartige oder Füllstoffe sowie pulvrige, körnchenförmige oder plattenförmige Füllstoffe genannt. Daraus sollen Formteile hergestellt werden, die in Abschnitt [0115] aufgeführt sind. Es handelt sich hierbei um eine Liste, die Teile im Elektrobau wie Relay-Gehäuse bis zu Haartrocknern und Shampooflaschen umfasst.

Die DE 101 53 858 C2 beschreibt eine Vorrichtung zur lösbaren Befestigung von wenigstens einem Flächenelement, ein System mit mehreren solchen Vorrichtungen und deren Verwendung. In Anspruch 19 dieser Vorveröffentlichung wird eine Vorrichtung beschrieben, bei welcher die Klemmflächen eines Basiselementes und/oder des mindestens eines Klemmelementes oder die Anlageflächen des mindestens einen Klemmelementes wenigstens teilweise mit Auflageelementen aus elastischem Material, insbesondere aus Gummi oder einem Kunststoff, mit oder ohne Glasfaserverstärkung, versehen sind. In Spalte 3, 1. Absatz, dieser Vorveröffentlichung wird erwähnt, dass sich zu Wartungs- und/oder Reparaturzwecken nachträglich leichter Zugang zu dem Raum zwischen einer Decke und einer abgehängten Decke zu erzielen ist.

Die DE 101 15 141 A1 beschreibt in den Absätzen [0030] und [0031] Rohrverbindungen, um die Enden von aus Kunststoff bestehenden Rohren miteinander zu verbinden. Die Rohrverbindungen können aus vorzugsweise elastischen, vorzugsweise dauerelastischen, aus Kunststoffen, glas- und/oder kohlefaserverstärkten Kunststoffen, holzartigen Werkstoffen, Metallen, wie Gusseisen, Keramiken oder dergleichen, hergestellt sein. Auf diese Weise sollen Verbindungsleitungen- oder Steigleitungsrohre und Schächte hergestellt werden.

Aus der DE 81 15 454 U1 (Seite 7, letzter Absatz) ist eine Klemmvorrichtung für Rohre oder Stäbe vorbekannt, bei der die Teile aus glasfaserverstärktem Polyamid hergestellt werden. Derartige Klemmvorrichtungen sollen bei Leuchten Verwendung finden, um die Höhe einer Leuchte zu verändern.

Die US 6,343,891 B1 (Spalte 2, Zeile 20 ff.) beschreibt Fahrradlenker, die aus Aluminium, Titan oder thermoplastischen Werkstoffen hergestellt werden sollen.

Aus der DE 1 131 469 A1 ist eine Klemmschellenverbindung zum dichten Befestigen von Deckeln, Rohranschlüssen oder anderen Bauteilen an Rohren- oder Behälteröffnungen mit nach außen umgebogenem Rand vorbekannt, bei denen das zu befestigende Bauteil einen im Außendurchmesser dem umgebogenen Rand etwa gleichen ringförmigen Bund aufweist.

Die DE 2 040 685 A1 zeigt Verbindungselemente mit ein- oder beidseitig aufgebrachten Beschichtungselementen aus vorbestrahltem Kunststoff, zum Beispiel Polyester oder einem anderen Harz mit oder ohne Glasgehalt. Fertigungstechnisch könne im Handauflegeverfahren oder maschinell gearbeitet werden.

### Aufgabe

Der Erfindung liegt die Aufgabe zugrunde, ein Gerüstsystem zur Verwendung im Karosseriebau der Kfz-Industrie zur Anordnung von Kniehebelspannvorrichtungen, Saugvorrichtungen, Zentrierdornen, Sensoren, Schweißvorrichtungen, Clinchvorrichtungen, Nietvorrichtungen oder dergleichen, geeignet zum Anordnen an einem Roboterarm, zu schaffen, wobei die Gewichte und damit die Massenträgheitskräfte ganz erheblich reduziert werden sollen.

Des weiteren liegt der Erfindung die Aufgabe zugrunde, ein Verfahren zum Herstellen eines derartigen Gerüstsystems oder wesentlicher Teile desselben zu schaffen.

### Lösung der Aufgabe betreffend das Gerüstsystem

Diese Aufgabe wird durch die in **Patentanspruch 1** wiedergegebenen Merkmale gelöst.

### Einige Vorteile

Bei dem erfindungsgemäßen Gerüstsystem sind die Klemmschellen aus einem Faserverbundwerkstoff hergestellt, der neben hoher Festigkeit das Gewicht solcher Gerüstsysteme ganz erheblich herabsetzt, so dass die Gewichts- und Massenträgheitskräfte gegenüber vorbekannten Gerüstsystemen solcher Art ganz erheblich reduziert werden können.

Die Klemmschellen des Gerüstsystems bestehen aus einem Faserverbundwerkstoff, der ein geeignetes Materialsystem aus Kunstharz aufweist. Hierzu können geeignete Stoff- oder Faserbahnen in aushärtbarem Kunstharz eingebettet sein.

### Weitere erfinderische Ausgestaltungen

Bei der erfinderischen Lösung nach **Patentanspruch 2** bestehen die Klemmschellen aus Kohlefasern, während bei der Lösung nach **Patentanspruch 3** die Klemmschellen aus einem Faserverbundwerkstoff mit Glasfasern, eingebettet in einem aushärtbaren Kunstharz, bestehen.

Dagegen betrifft die Lösung nach **Patentanspruch 4** ein Gerüstsystem mit Klemmschellen, die aus Kunststoff-Fasern bestehen, die in einer geeigneten Matrix aus aushärtbaren Kunstharz eingebettet sind.

Bei all diesen Lösungen ergeben sich Gerüstsysteme mit Klemmschellen hoher Festigkeit bei geringem Gewicht.

**Patentanspruch 5** beschreibt eine Lösung, bei der die Klemmschellen konstruktiv einfach ausgebildet sind, wobei den Klemmschellenteilen Inlay-Körper zugeordnet sind, die eine formmäßige Ausgestaltung aufweisen, die mit der Peripherie der zugeordneten zylindrischen oder polygonförmigen Rohre korrespondieren, vorzugsweise diese formschlüssig umschließen, so dass sich eine gute Krafteinleitung bei hohem Kraftschluss ergibt.

Gemäß **Patentanspruch 6** besteht das Inlay bei dieser Ausführungsform aus einer Aluminiumlegierung, während es bei der Ausführungsform nach **Patentanspruch 7** aus einer Magnesiumlegierung besteht. Diese Stoffe besitzen ebenso wie das Inlay aus Kohlefasern gemäß **Patentanspruch 8** bei entsprechend hoher Druckfestigkeit ein relativ geringes spezifisches Gewicht, so dass die Gewichts- und Massenträgheitskräfte nur unwesentlich vergrößert werden, was sich besonders dann günstig auswirkt, wenn solche Klemmschellen mit den damit gehaltenen Vorrichtungsteilen wie Kniehebelspannvorrichtung oder dergleichen an Roboterarmen befestigt werden.

**Patentanspruch 9** beschreibt eine besonders vorteilhafte Ausführungsform der Erfindung.

Wird eine Ausführungsform nach **Patentanspruch 10** gewählt, so werden Kerbspannungen und damit Spannungsanhäufungen an den Klemmschellenteilen weitgehend vermieden.

**Patentanspruch 11** beschreibt eine weitere vorteilhafte Ausführungsform der Erfindung, was auch für die Ausführungsform nach den **Patentansprüchen 12** bis **28** gilt.

Die Ausführungsform nach den **Patentansprüchen 26** bis **28** ermöglichen eine weitgehende Winkelverstellung von sich kreuzenden Rohren oder Gerüstteilen.

### Lösung der Aufgabe betreffend das Verfahren

Diese Aufgabe wird durch **Patentanspruch 29** gelöst.

### Einige Vorteile

Bei der erfinderischen, selbständigen Lösung nach **Patentanspruch 29** werden die entsprechenden Faserverbundwerkstoffe als Teile eines Materialsystems in Kunststoff eingebettet und in geeigneter Weise zu dem Gerüstteil geformt und bis zur endgültigen Formgebung zum Aushärten gebracht.

### Weitere erfinderische Ausgestaltungen

**Patentanspruch 30** beschreibt eine Verfahrensweise, bei welcher das Materialsystem aus Faserverbundwerkstoff und Harz in der Form bis zum Aushärten belassen wird, während Patentanspruch 31 eine Verfahrensweise beschreibt, bei der die Herstellung im Handauflegeverfahren in einer entsprechenden Negativform geschieht.

Bei der Lösung nach **Patentanspruch 32** erfolgt die Herstellung eines Materialsystems aus Kunstharz mit Glasfaserverbundwerkstoffen im Handauflegeverfahren, während bei der Verfahrensweise nac**h Patentanspruch 33** Gewebeschichten mit anderen Faserverbundwerkstoffen, zum Beispiel Kohlefasern und Kunstharz, zum Aushärten in der gewünschten Form gebracht werden, beispielsweise um Klemmschellenteile herzustellen.

Eine weitere erfinderische Verfahrensweise ist in **Patentanspruch 34** beschrieben.

Das Faserverbund-Inlay sollte aus einem dünnen Laminat mit 0 Grad/90 Grad-Orientierung und zwei Zwickelelementen mit 0 Grad-Orientierung bestehen. Die Länge des Laminats entspricht der Länge der Schelle und die Breite entspricht dem Durchmesser des Stabes bzw. Rohres. Die Dicke des Laminates entspricht dem halben Abstand der sich gegenüberliegenden Flanschflächen. Die Zwickelelemente sind rechtwinklig und so mit dem dünnen Laminat verklebt, dass ihre Innenkontur den halben Stabdurchmesser abbildet. Aufgrund der Faserorientierung besitzt eine Inlay-Hälfte eine hohe Biegesteifigkeit in Längsrichtung und eine niedrigere in Querrichtung. Während die hohe Längssteifigkeit eine gute Kraftverteilung in Längsrichtung bewirkt, führt die niedrigere in Querrichtung dazu, dass sich das Inlay gut dem Stab- bzw. Rohrdurchmesser anpasst und so auch in dieser Richtung für eine gute Kraftverteilung gesorgt wird.

Die Fertigung der Faserverbund-Inlays kann natürlich in einer Negativform erfolgen, in die die unidirektionalen Faserbündel und das vorgefertigte Laminat eingelegt werden.

Eine andere Fertigungsweise sieht vor, dass ein Formstab mit entsprechendem Durchmesser, vomehmlich entsprechend dem Durchmesser des später zu klemmenden Rohres oder Stabes, mit einer Trennfolie versehen wird. An diesen so präparierten Stab wird mittig und tangential das vorgefertigte CFK-Laminat provisorisch angeklebt und in die beiden sich ergebenden Zwickel ein getrennter C-Faserroving (Faserbündel) gewickelt. Der so bewickelte Körper wird zwischen zwei Profilen auf die Breite des dünnen Laminates zusammengedrückt und härtet aus. Nach dem Aushärten wird die Trennfolie um den Formstab herum entlang der Mantellinie aufgeschnitten, der Formstab herausgenommen und die Trennfolie vom Verbundwerkstoff abgezogen. Die Inlay-Teile oder Inlay-Hälfte liegt nun als Struktur mit Längserstreckung vor und kann in einzelne Stücke aufgeteilt werden.

Der multidirektionale Aufbau der Klemmschellen wäre wegen der höheren Lochleibungsfestigkeit wichtig, wenn die Verdrehsteifigkeit der Stabverbindung nicht über die Kontaktfläche der Inlay-Hälften, sondern über z. B. vier Befestigungsschrauben erzeugt würde.

Wenn dies nicht der Fall ist, wie bei einteiligen Inlays, zum Beispiel Metall-Inlays, sollte der Lagenaufbau bidirektional sein (0 Grad/90 Grad). Die Flansche der Schellen mit variablem Stabwinkel sollten zweckmäßig eine runde Grundfläche haben und bogenförmige Langlöcher besitzen, die Verdrehwinkel zwischen 0 Grad und 90 Grad zulassen.

Auf Grund der hohen Längssteifigkeit der CFK-Sandwichstäbe sind diese im Vergleich zu Al-Rohren wesentlich dünnwandiger und damit empfindlicher gegen konzentrierte Krafteinleitungen. Dieses Problem tritt insbesondere dann auf, wenn ein CFK-Stab in einer steifen Metallschelle geklemmt und auf Biegung belastet wird. Es treten dann am Beginn der Schelle lokal hohe Querkräfte auf, die nicht nur zu einer geringen Stabfestigkeit, sondern auch zu einer niedrigeren Biegesteifigkeit führen.

Dieses Problem kann dadurch gelöst werden, dass beispielsweise Faserverbundhülsen in Form von Halbschalen zwischen Stab und Schelle so angeordnet und eingeklemmt werden, dass die Hülsen über die Schellenkante hinausragen. Dabei werden konzentrierte Kräfte auf größere Flächen verteilt und so vom Stab besser aufgenommen.

Eine andere Lösung zur Abmilderung der konzentrierten Einleitung einer Querkraft bestehe darin, dass die Stabenden innen mit lose eingesteckten Al-Rohrhülsen versehen werden, die ebenfalls die Schellenkante überragen.

Falls für die Fertigung der Klemmschellen im Handauflegeverfahren auch andere Verfahren, zum Beispiel Prepregfertigung, RTM-Verfahren angewendet werden, so lassen sich hiermit im Bedarfsfalle auch gute Ergebnisse erzielen.

Faserverbundwerkstoffe beinhalten Fasern und Matrix. Die Fasern können in Form von Matten, Geweben und Gelegen vorliegen. Die Matrix ist beim Handlaminieren ein Laminierharz (Epoxyd, Polyester oder Vinylester-Harz) und beim Prepregverfahren ein Prepreg-Harz. Als Fasermaterialien kommen Karbonfasem, Glasfasern und Aramidfasern bevorzugt zur Anwendung. Die Inlays können sowohl als einteilige wie auch als zweiteilige Inlays verwendet werden.

In der Zeichnung ist die Erfindung - teils schematisch - beispielsweise veranschaulicht. Es zeigen:
- Fig. 1: ein Gerüstsystem mit verschiedenen angeordneten Vorrichtungsteilen in perspektivischer Darstellung;
- Fig. 2: eine Klemmschelle in einer ersten Ausführungsform, in perspektivischer Darstellung, teils abgebrochen dargestellt;
- Fig. 3: einen Schnitt nach der Linie III - III der Fig. 2;
- Fig. 4: einen Zentrier- und Indikatorstift in der Seitenansicht;
- Fig. 5: eine weitere Ausführungsform, ebenfalls in perspektivischer Darstellung;
- Fig. 6: einen Schnitt nach der Linie VI - VI der Fig. 5;
- Fig. 7: einen Schnitt entsprechend Fig. 6, teils abgebrochen dargestellt, nach einem Abscheren des Zentrier- und Indikatorstiftes;
- Fig. 8: die Anbindung einer sogenannten Adapterplatte an ein Gerüstsystem gemäß der Erfindung, in perspektivischer Darstellung;
- Fig. 9: die Anbindung einer Adapterplatte an ein Gerüstsystem gemäß der Erfindung bei einer anderen Ausführungsform, in perspektivischer Darstellung;
- Fig. 10: wiederum die Anbindung einer Adapterplatte an ein Gerüstsystem gemäß der Erfindung bei einer weiteren Ausführungsform, in perspektivischer Darstellung;
- Fig. 11: ein Gerüstsystem in sogenannter U-Bauform mit verschiedenen gemäß der Erfindung ausgestalteten Klemmschellen und Adapterplatte, in perspektivischer Darstellung;
- Fig. 12: ein Gerüstsystem in sogenannter Tannenbaum-Ausführungsform, mit verschiedenen Klemmschellen und Adapterplatten gemäß der Erfindung, in perspektivischer Darstellung;
- Fig. 13: eine weitere Ausführungsform der Erfindung, mit einem sogenannten Gerüstsystem in H-Bauform, mit verschiedenen gemäß der Erfindung ausgebildeten Klemmschellen, in perspektivischer Darstellung;
- Fig. 14: eine Verbindung zwischen einem Gerüstsystem gemäß der Erfindung und einem Rahmen mit einer erfindungsgemäßen Klemmschelle;
- Fig. 15: den Grundaufbau eines Gerüstsystems mit Ständer und erfindungsgemäß ausgestalteten Klemmschellen;
- Fig. 16: eine weitere, erfindungsgemäße Ausführungsform in Explosionsdarstellung;
- Fig. 17: eine Klemmschellenanordnung mit zwei sich im Rechtwinkel kreuzenden Profilrohren in Montagestellung;
- Fig. 18 bis Fig. 20: die Herstellung eines Inlays bei einer weiteren Ausführungsform der Erfindung;
- Fig. 21: eine Explosionsdarstellung einer weiteren Ausführungsform der Erfindung mit sich kreuzenden Rohren oder Stangen eines Gerüstsystems mit einem Zwischenring zwischen den Inlays;
- Fig. 22: eine weitere Ausführungsform der Erfindung, ebenfalls in perspektivischer Explosionsdarstellung;
- Fig. 23: eine Seitenansicht an einer Verbindungsstelle von sich kreuzenden Rohren gemäß Fig. 22;
- Fig. 24: ein Schnitt nach der Linie XXIV - XXIV der Fig. 23;
- Fig. 25: eine Draufsicht zu den aus den Fig. 23 bzw. 24 ersichtlichen Ausführungsformen in perspektivischer Darstellung;
- Fig. 26: eine Draufsicht zu Fig. 23;
- Fig. 27: eine Unteransicht zu Fig. 24;
- Fig. 28: eine perspektivische Unteransicht zu Fig. 25;
- Fig. 29: eine Seitenansicht zu einer Verbindung entsprechend Fig. 21 in montierter Stellung;
- Fig. 30: einen Schnitt nach der Linie XXX - XXX der Fig. 29;
- Fig. 31: eine perspektivische Darstellung zu den Fig. 29 bzw. 30 von unten gesehen;
- Fig. 32: eine Draufsicht zu Fig. 32;
- Fig. 33: eine Unteransicht zu Fig. 30 und
- Fig. 34: eine perspektivische Oberansicht zu den Fig. 29 bis 33.

In der Zeichnung ist die Erfindung in Anwendung auf ein Gerüstsystem mit zweiteiligen Klemmschellen veranschaulicht. Man spricht in diesem Zusammenhang auch von sogenannter "Halbschalentechnik", obwohl die beiden Hälften der Klemmschellen nicht im mathematischen Sinne jeweils eine Hälfte der gesamten Klemmschelle darzustellen brauchen. Wenn also in diesen Unterlagen der Begriff "Halbschalentechnik" zur Anwendung gelangt, so ist hiermit nicht im streng mathematischen Sinne die hälftige Aufteilung der Klemmschelle gemeint, sondern dieser Ausdruck bezieht sich auf die "Zweiteiligkeit" der Klemmschellenausführung zum Umfassen eines an seinem Außenumfang zylindrischen Rohres.

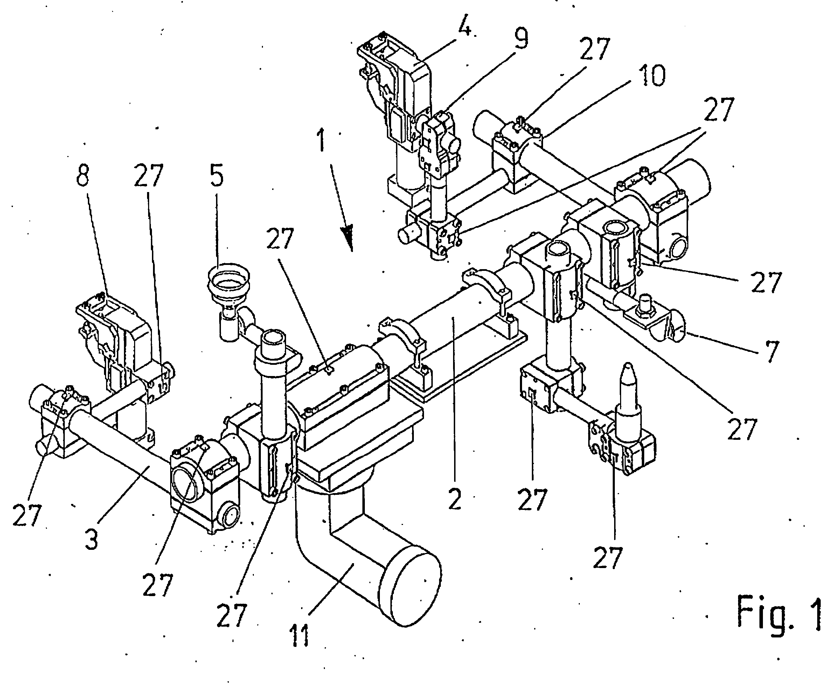

Das Gerüstsystem ist in Fig. 1 insgesamt mit dem Bezugszeichen 1 bezeichnet. Grundelement dieses Gerüstsystems sind Aluminiumrohre mit innen und außen kreisrunder Querschnittsform von gleichen oder unterschiedlichen Durchmessern.

In der Zeichnung sind lediglich zwei solcher aus Aluminium bestehenden zylindrischen Rohre mit dem Bezugszeichen 2 bzw. 3 bezeichnet worden.

Als Verbindungselemente kommen Klemmschellen gemäß der Erfindung in Betracht, die nachfolgend noch im einzelnen beschrieben werden und die in sogenannter "Halbschalentechnik" ausgebildet sind, das heißt nur aus zwei Bauteilen bestehen, die durch Schrauben lösbar miteinander verbunden sind und die zwischen ihren miteinander zu verschraubenden Bauteilen das betreffende Rohr oder die Rohre kraftschlüssig mit formmäßig der Außenmantelfläche der Rohre angepassten Oberflächen umschließen.

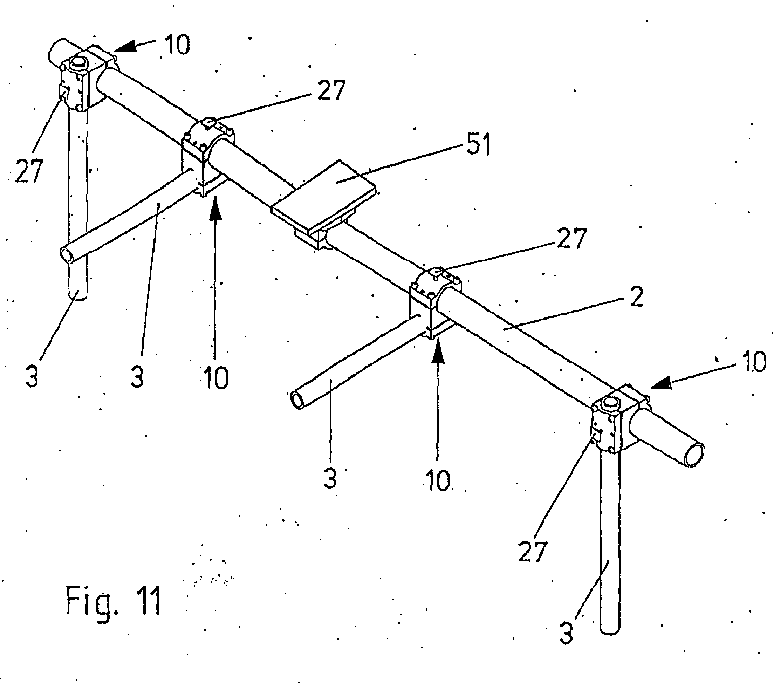

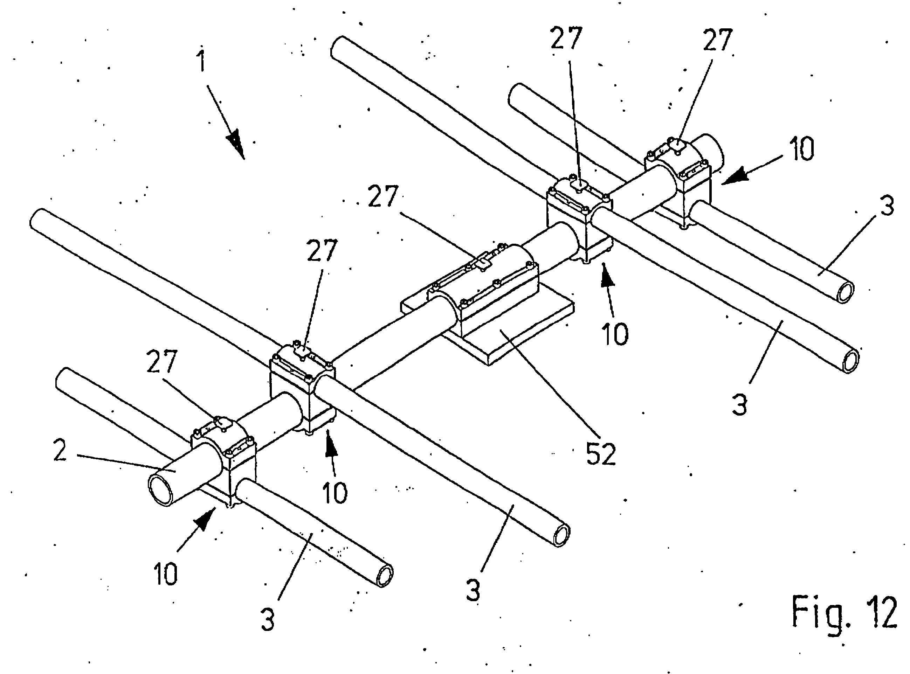

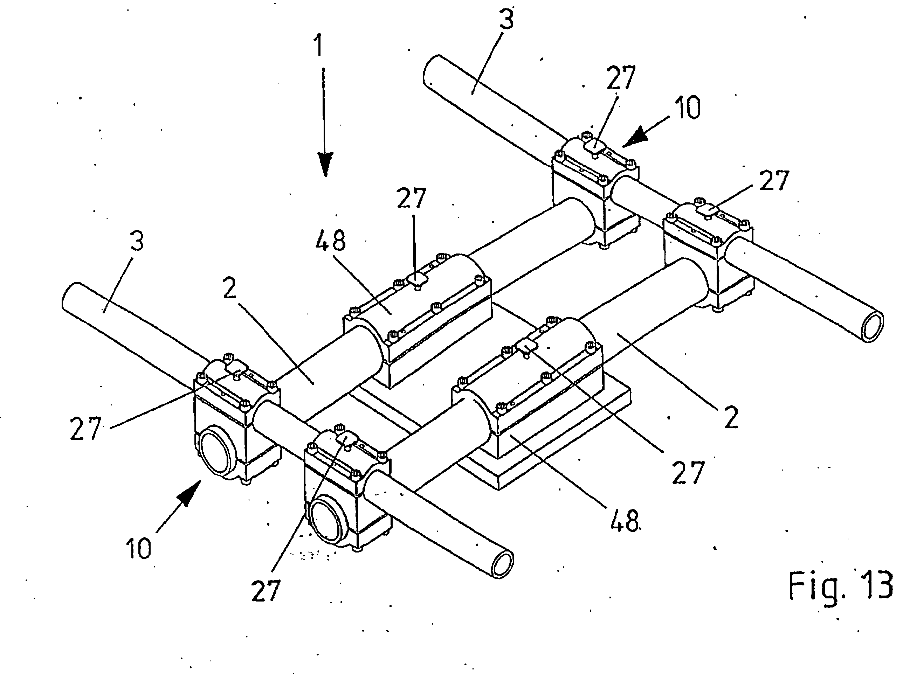

Ein Gerüstsystem 1 gemäß der Erfindung verwendet z. B. als Standardbauformen drei konstruktive Grundrahmen, nämlich die U-Bauform gemäß Fig. 11, die T-Bauform gemäß Fig. 12 und die H-Bauform gemäß Fig. 13.

Zur Anordnung der verschiedenen Vorrichtungen wie zum Beispiel Kniehebelspannvorrichtungen 4, Saugvorrichtungen 5, Zentrierdome 6, Schweißvorrichtungen (nicht dargestellt), Clinchvorrichtungen (nicht dargestellt), Sensoren 7, Clinchvorrichtungen 8 und zur Verbindung der verschiedenen Rohre 2 und 3 dienen Klemmschellen, von denen in Fig. 1 lediglich die Klemmschellen 9 und 10 mit Bezugszeichen versehen sind. Das ganze Gerüstsystem 1 ist mit derartigen Klemmschellen versehen, um in den unterschiedlichen Ebenen und Winkelstellungen die zu befestigenden Vorrichtungen anzuordnen und nach ihrem Einbauen und Einjustieren auch zu arretieren.

Mit dem Bezugszeichen 11 ist ein Roboterarm bezeichnet, der einem nicht dargestellten Roboter zugeordnet ist, durch den das Gerüstsystem bewegt, zum Beispiel angehoben und geschwenkt werden kann.

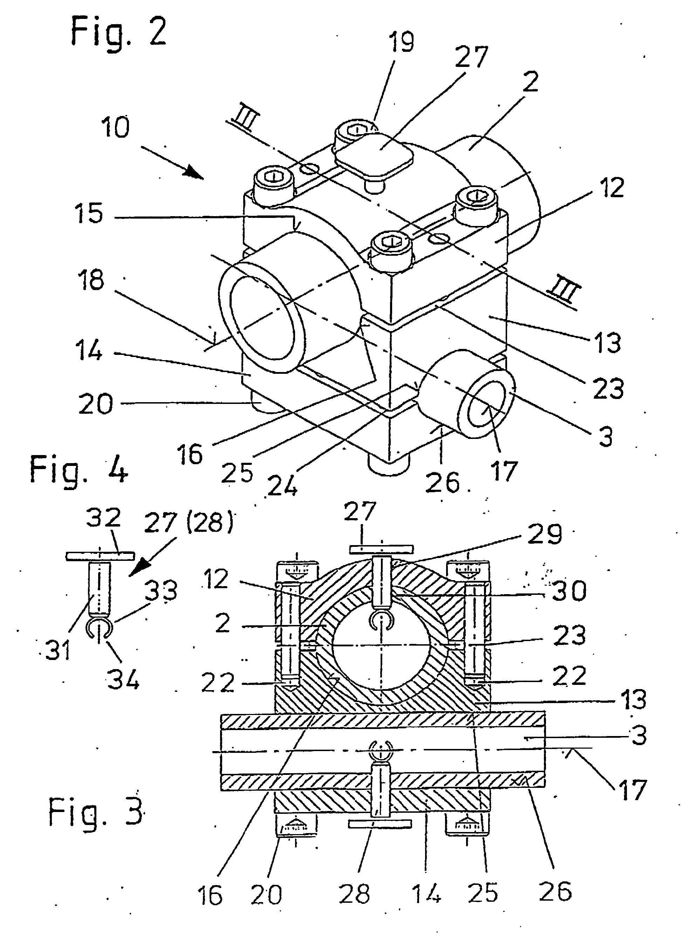

Die aus den Fig. 2 bis 4 ersichtliche Klemmschelle 10 ist derart ausgebildet, dass jeweils zwei Klemmschellenteile 12, 13 oder 13 und 14 ein kreisrundes Rohr 2 bzw. ein anderes zylindrisches Rohr 3 kraftschlüssig zu halten vermögen. Zu diesem Zweck ist das Klemmschellenteil 12 mit vier Durchgangsbohrungen gleichen Durchmessers versehen, durch die bei der dargestellten Ausführungsform mit Innensechskantköpfen versehene Schrauben hindurchgesteckt und in mit Gewinde versehene Sackbohrungen 22 des Klemmschellenteils 13 eingeschraubt werden können, um die Klemmschellenteile 12 und 13 kraftschlüssig gegeneinander zu verspannen und dadurch das Aluminiumrohr 2 zwischen den Klemmschellenteilen 12 und 13 fest kraftschlüssig einzuspannen. Zu diesem Zweck besitzen sowohl das Klemmschellenteil 12 als auch das Klemmschellenteil 13 jeweils eine Aussparung 15 bzw. 16, die entsprechend der Peripherie des Rohres 2 verlaufend gestaltet sind, so dass sich eine satte Anlage der Klemmschellenteile 12 und 13 an der zylindrischen Peripherie des Rohres 2 ergibt.

Wie man erkennt, sind der Außen- und Innendurchmesser des Rohres 2 erheblich größer bemessen als die entsprechenden Durchmesser des Rohres 3, dessen Längsachse 17 um 90 Grad versetzt zu der Längsachse 18 des Rohres 2 verläuft und in der aus Fig. 2 und 3 ersichtlichen Darstellung unterhalb des Rohres 2 angeordnet ist. Das Klemmschellenteil 14 besitzt ebenfalls vier Durchgangsbohrungen, die im einzelnen aus der Zeichnung nicht ersichtlich sind und durch die ebenfalls vier gleich große Schrauben mit Innensechskantköpfen hindurchgreifen und in nicht dargestellte, mit Gewinde versehene Sackbohrungen des Klemmschellenteils 13 eingreifen, so dass das Klemmschellenteil 14 gegen das Klemmschellenteil 13 verspannt werden kann. Von den vier dem Klemmschellenteil 12 zugeordneten Schrauben ist nur eine Schraube mit dem Bezugszeichen 19 bezeichnet worden, während von den vier dem Klemmschellenteil 14 zugeordneten Schrauben nur die Schraube 20 mit einem Bezugszeichen bezeichnet wurde. Die übrigen Schrauben sind entsprechend ausgebildet. Die Schrauben 19 und 20 und die übrigen nicht bezeichneten Schrauben verlaufen mit ihren Längsachsen jeweils parallel zueinander. Mit 21 ist eine Schraube bezeichnet.

Die Figuren 2 und 3 lassen außerdem erkennen, dass im eingespannten Zustand der Aluminiumrohre 2 und 3 zwischen den jeweiligen Klemmschellenteilen 12 und 13 oder 13 und 14 jeweils ein Spaltabstand 23 bzw. 24 vorgesehen ist, so dass die Klemmschellenteile 12 und 13 oder 13 und 14 nachspannbar sind, falls dies erforderlich sein sollte.

Auch zwischen den Klemmschellenteilen 13 und 14 sind Ausnehmungen 25 bzw. 26 vorgesehen, die der Peripherie des einzuklemmenden Rohres 3 formmäßig angepasst sind, so dass sich eine satte Anlage an der zylindrischen Peripherie des Rohres 3 ergibt, um dieses optimal und großflächig einklemmen zu können.

Wie aus den Fig. 2 und 3 ersichtlich ist, sind den beiden Klemmschellenteilen 12, 13 oder 13, 14 jeweils ein aus Glas oder einem glasartigen, spröden Kunststoff bestehender Zentrier- und Indikatorstift 27 bzw. 28 zugeordnet. Der Zentrier- und Indikatorstift 27 bzw. 28 durchgreift jeweils koaxial zueinander angeordnete Durchgangsbohrungen 29 bzw. 30, die in dem Scheitelpunkt des Klemmschellenteils 12 und in dem eingespannten Rohr 2 angeordnet sind. Der Durchmesser der beiden Durchgangsbohrungen 29 und 30 kann gleich groß ausgebildet sein, derart, dass der Zentrier- und Indikatorstift satt an den Bohrungswandungen anliegt. Mit 31 ist ein stangenförmiger Abschnitt 31 (Fig. 4) des Zentrier- und Indikatorstiftes 27 bezeichnet. Der stangenförmige Abschnitt 31 ist zylindrisch ausgebildet und weist an seinem aus der Bohrung 30 des Klemmstückes 12 herausragenden Endabschnitt einen im Durchmesser erheblich vergrößerten Signalkopf 32 auf. Der Signalkopf 32 kann mit einer auffallenden Farbgebung, zum Beispiel einer leuchtenden großen Fluoreszenzfarbgebung, versehen sein, so dass er auf jeden Fall auffällig oberhalb der äußeren Umgrenzungskante des Klemmschellenteils 12 ersichtlich ist.

An den zylindrischen stangenförmigen Abschnitt 31 schließt sich ein im Durchmesser erheblich vergrößerter, widerhakenförmiger Endabschnitt 34 einstückig an. 33 ist ein Längenabschnitt. Statt der widerhakenförmigen Ausgestaltung kann hier auch ein Wulst oder ein in sonstiger Weise im Durchmesser vergrößerter Endabschnitt 34 versehen sein. Der Endabschnitt 34 ist bei der dargestellten Ausführungsform federelastisch ausgebildet und besteht aus einem kautschukartige Eigenschaften aufweisenden Polymer, zum Beispiel aus Polyurethan oder Polyamid, oder aus federelastischem Metall. Der Endabschnitt 34 kann mit dem Abschnitt 31 durch Kleben oder dergleichen verbunden sein. Auf diese Weise ist es möglich, den Zentrier- und Indikatorstift 27 in die miteinander fluchtenden Bohrungen 29, 30 hineinzustecken, wobei der Endabschnitt 34 federelastisch verformt wird und sich nach seinem Austreten aus der Durchgangsbohrung 30 in den Innenraum des Rohres 2 wieder aufweitet (Fig. 3). Danach kann der Zentrier- und Indikatorstift nicht ohne weiteres mehr aus den Bohrungen 29, 30 herausgezogen werden.

Auch der Zentrier- und Indikatorstift 28 ist in gleicher Weise ausgebildet und angeordnet wie der Zentrier- und Indikatorstift 27, so dass die Beschreibung des Zentrier- und Indikatorstiftes 27 auch für den Zentrier- und Indikatorstift 28 gilt, insbesondere was den aus Fig. 4 ersichtlichen Aufbau der Einzelteile anbetrifft. Die Einzelteile des Zentrier- und Indikatorstiftes 27 bzw. 28 sind so, wie dies in Fig. 4 dargestellt ist, weshalb in Klammern hinter dem Bezugszeichen "27" das Bezugszeichen "28" gesetzt wurde, um deutlich zu machen, dass diese Darstellung und Beschreibung auch für den Zentrier- und Indikatorstift 28 gilt.

Die Klemmschelle gemäß den Fig. 2 und 3 ermöglicht es somit, zwei sich im rechten Winkel mit ihren Längsachsen kreuzende Rohre 2 und 3 kraftschlüssig miteinander zu verbinden und sie in Bezug auf die jeweiligen beiden Klemmschellenteile 12 bzw. 13 oder 13 und 14 durch die Zentrier- und Indikatorstifte 27 bzw. 28 in passgerechter Lage zueinander zu zentrieren.

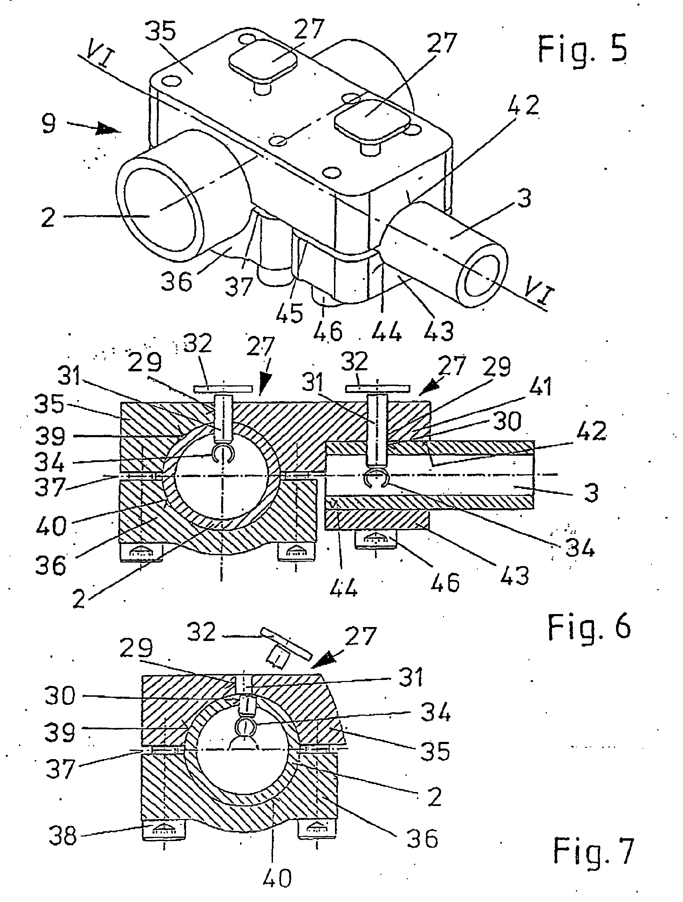

Bei der Ausführungsform nach Fig. 5 und 6 sind ebenfalls zwei Klemmschellenteile 35 bzw. 36 vorgesehen, die durch mehrere Schraubbolzen gegen ein Rohr 2 kraftschlüssig verspannt sind. Auch hier sieht man wiederum einen Spaltabstand 37 zwischen den Klemmschellenteilen 35 und 36. Von den Schrauben wurde nur die eine Schraube 38 mit einem Bezugszeichen versehen. Die übrigen Schrauben sind entsprechend ausgebildet und angeordnet und greifen jeweils in mit Gewinde versehene Sackbohrungen des Klemmschellenteils 35 ein. Im übrigen sind die Schrauben 38 mit Innensechskantköpfen versehen. Deutlich erkennt man wiederum einen Zentrier- und Indikatorstift, der aus Gründen der Vereinfachung ebenfalls das Bezugszeichen 27 trägt und der in gleicher Weise ausgebildet und angeordnet ist, wie dies im Zusammenhang mit den Zentrier- und Indikatorstiften 27 und 28 beschrieben wurde, weshalb für Teile gleicher Funktion die gleichen Bezugszeichen verwendet worden sind. Die Klemmschellenteile 35 und 36 weisen Ausnehmungen 39 bzw. 40 auf, mit denen die Klemmschellenteile 35 und 36 das einzuklemmende Rohr 2 peripher großflächig umschließen und einklemmen.

Das Klemmschellenteil 35 weist außerdem eine Klemmschulter 41 einstückig auf, die das aus Fig. 6 ersichtliche hintere Klemmschellenteil 36 überkragt und hier ebenfalls mit einer Ausnehmung 42 (Fig. 5) zur peripheren Umschließung eines Rohres 3 versehen ist, das durch ein unteres Klemmschellenteil 43 mit Ausnehmungen 44 eingeklemmt wird. Die Ausnehmung 44 ist wiederum dem Umfang des Rohres 3 formmäßig angepasst, so dass sich eine satte Anlage ergibt. Das Klemmschellenteil 43 ist ebenfalls mit Spaltabstand 45 zu der Klemmschulter 41 angeordnet, dass es über zwei beabstandete Schrauben angezogen werden kann. Von diesen Schrauben ist aus Fig. 6 lediglich eine Schraube 46 erkennbar. Auch diese Schraube 46 und die verdeckte Schraube weisen Innensechskantköpfe auf. Der Klemmschulter 41 ist ebenfalls ein Zentrier- und Indikatorstift 27 zugeordnet, der in gleicher Weise ausgebildet und angeordnet ist, wie dies im Zusammenhang mit den Zentrier- und Indikatorstiften 27 der Ausführungsform nach Fig. 2 und 3 dargestellt und beschrieben worden ist, so dass für Teile gleicher Funktion die gleichen Bezugszeichen verwendet wurden.

Alle Zentrier- und Indikatorstifte bestehen bei sämtlichen dargestellten Ausführungsformen aus einem sprödbruchempfindlichen Werkstoff, insbesondere aus Glas.

Verschiebt sich durch irgendeinen Umstand das Rohr 2 bzw. 3 des erfindungsgemäßen Gerüstsystems relativ gegenüber einer zu haltenden Vorrichtung, zum Beispiel einer Kniehebelspannvorrichtung 4, so wird der entsprechende Zentrier- und Indikatorstift 27, 28 abgeschert. Dies ist in Fig. 7 schematisch veranschaulicht. Zu diesem Zweck kann der Zentrier- und Indikatorstift im mittleren Bereich geschwächt oder mit einer Sollbruchstelle versehen sein. Der Zentrier- und Indikatorstift kann dann entgegen der Darstellung aus Fig. 7 auch in seiner Bohrung 29 verkantet sein, so dass die Bedienungsperson dies bereits erkennen kann. Bei der anschließenden Manipulation des Gerüstsystems, zum Beispiel durch einen Roboterarm 11, wird das Gerüstsystem im Raum verlagert, zum Beispiel gekippt oder geschwenkt, so dass der abgescherte Teil des Zentrier- und Indikatorstiftes mit dem Signalkopf 32 aus der Bohrung 29 herausfällt und/oder aus dieser verkantet hervorragt, so dass die Bedienungsperson sofort erkennt, dass die betreffende Vorrichtung nicht mehr ihre passgenaue Einbaulage hat. Es können dann sofort die geeigneten Maßnahmen ergriffen werden, um diesen Fehler abzustellen, das heißt, die entsprechende Klemmstelle mit der zugeordneten Vorrichtung wieder in die passgenaue Einbaulage zu bringen, die dann durch einen neuen Zentrier- und Indikatorstift wieder markiert wird. Dies gilt auch für den Zentrier- und Indikatorstift der Klemmschulter 41 und für alle anderen aus der Zeichnung ersichtlichen Zentrier- und Indikatorstifte. Es hat sich gezeigt, dass bei Verwendung von Glas der Zentrier- und Indikatorstift nach dem Abscheren regelrecht aus den Bohrungen herausgeschleudert wird.

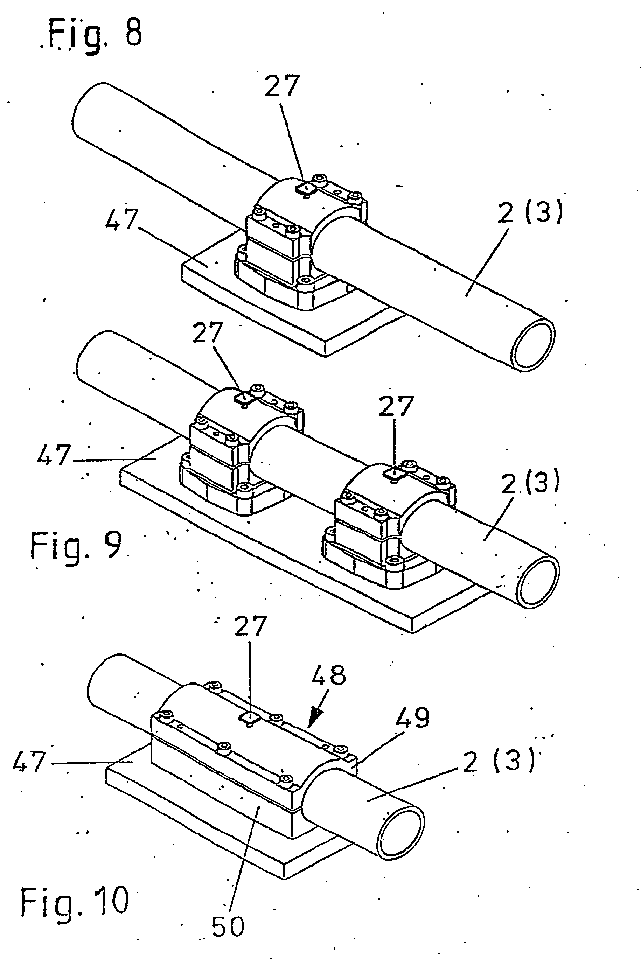

Wie man zum Beispiel aus den Fig. 8 und 9 erkennt, ist jeder Klemmschelle 10 je eine Adapterplatte 47 zugeordnet. Auch die Ausführungsform nach Fig. 10 besitzt eine solche Adapterplatte 47. Diese Ausführungsform unterscheidet sich von den übrigen Klemmschellen dadurch, dass die zweiteilig ausgebildete Klemmschelle 48 zwei Klemmschellenteile 49, 50 aufweist, die durch insgesamt sechs Innensechskantschrauben miteinander kraftschlüssig verbunden sind.

Auch bei der Ausführungsform nach Fig. 11 besitzt eine mittlere Klemmschelle ein nach oben (in der Zeichnungsebene gesehen) gerichtetes als Adapterplatte 51 ausgebildetes Arretierteil. Eine solche Adapterplatte 52 ist auch bei der Ausführungsform aus Fig. 12 im mittleren Längenbereich des Rohres 2 zu erkennen. Ferner weist die Ausführungsform nach Fig. 13 eine Adapterplatte 53 größerer Abmessung auf, mit deren im mittleren Bereich der beiden parallel mit ihren Längsachsen zueinander verlaufenden Rohren 2 zwei Klemmschellen 48 entsprechend Fig. 10 angeordnet sind. Die Adapterplatten 47 und folgende dienen zum Anschluss von anderen Vorrichtungsteilen (nicht dargestellt).

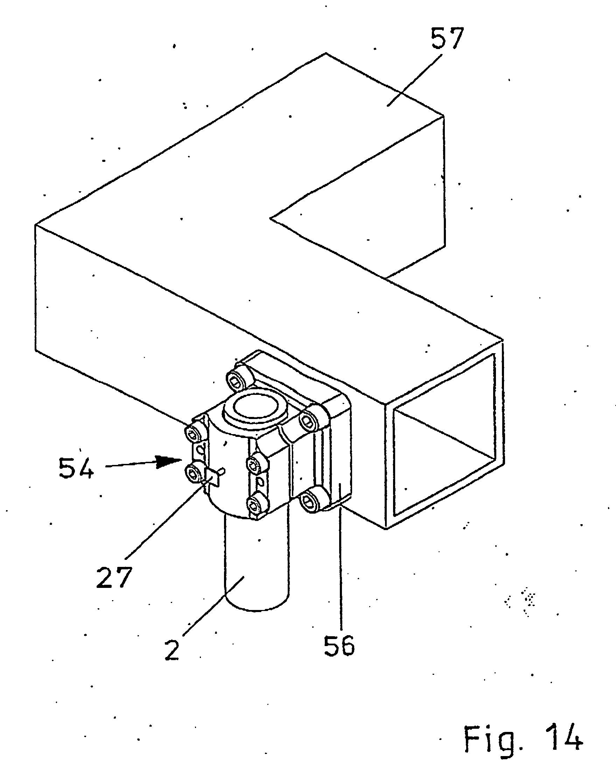

Bei der Ausführungsform nach Fig. 14 ist eine Klemmschelle 54 über eine Adapterplatte 56 mit einem Rahmen 57 über insgesamt vier Schrauben mit Innensechskantköpfen verbunden. Die Klemmschelle 54 ist prinzipiell wie die in Fig. 8 und 9 dargestellten Klemmschellen ausgestaltet. 55 ist eine Klemmschelle.

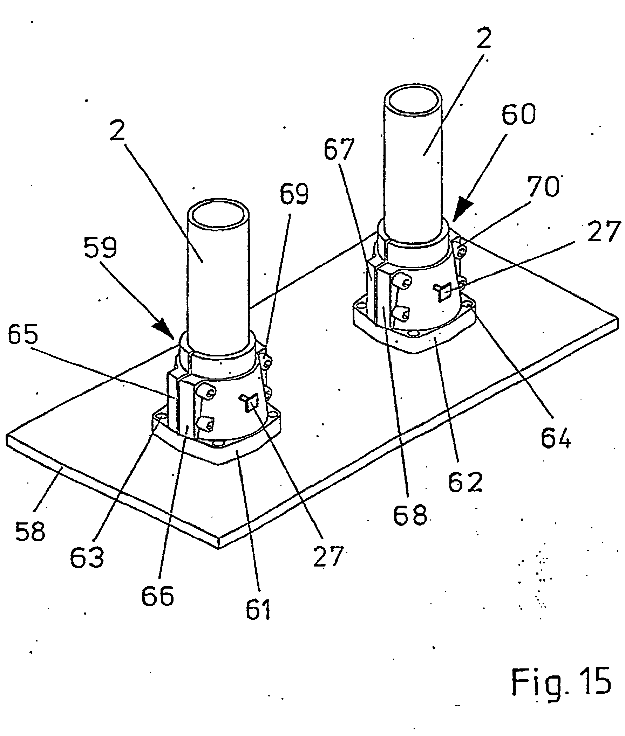

Bei der Ausführungsform nach Fig. 15 sind zwei Aluminiumrohre 2 aufrecht stehend (in der Zeichnungsebene gesehen) auf einer Adapterplatte 58 angeordnet und über Klemmschellen 59 bzw. 60 gehalten, die jeweils mit einem Flansch 61 bzw. 62 mit der Adapterplatte 58 verbunden ist. Zu diesem Zwecke sind in den Flanschen 61, 62 insgesamt vier Löcher vorgesehen, von denen jeweils nur eine Bohrung 63 bzw. 64 mit einem Bezugszeichen versehen worden ist. Durch diese Bohrung greifen Schraubbolzen hindurch, die in mit Gewinde versehene Bohrungen der Adapterplatte 58 oder durch hier vorgesehene Durchgangsbohrungen hindurchgreifen und in nicht dargestellte Vorrichtungsteile eingeschraubt sind, die auf der gegenüberliegenden Adapterplatte 58 angeordnet sind.

Die Klemmschellen 59 und 60 bestehen wiederum aus zwei Klemmschellenteilen 65, 66 bzw. 67, 68, die durch insgesamt vier Schrauben mit Innensechskant kraftschlüssig miteinander verbunden sind und zwischen sich die Rohre 2 einklemmen. Zu diesem Zweck sind die Klemmschellenteile 65, 66 bzw. 67 und 68 mit Durchgangsbohrungen - jedenfalls mit Gewinde - verbunden, in die Schrauben 69 bzw. 70 eingreifen.

Bei allen aus der Zeichnung ersichtlichen Ausführungsformen sind die jeweils ein Rohr nur durch zwei Klemmschellenteile arretierenden Bauteile der Klemmschellen zusätzlich durch Zentrier- und Indikatorstifte versehen, die jeweils anzeigen, ob die passgenaue Lage der Rohre 2 bzw. die diesen zugeordneten Vorrichtungsteilen verlassen wurde.

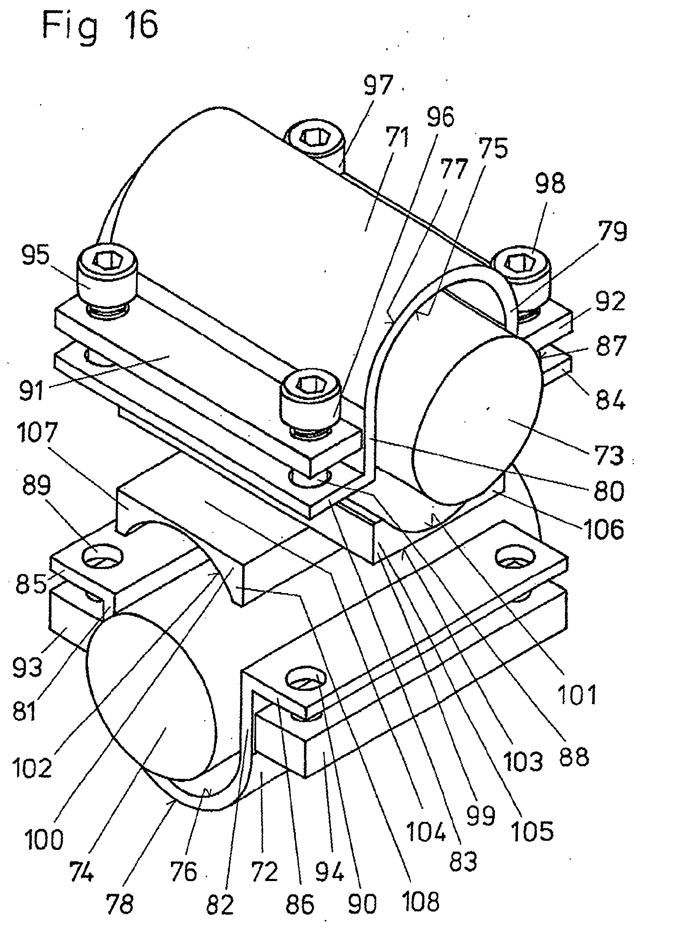

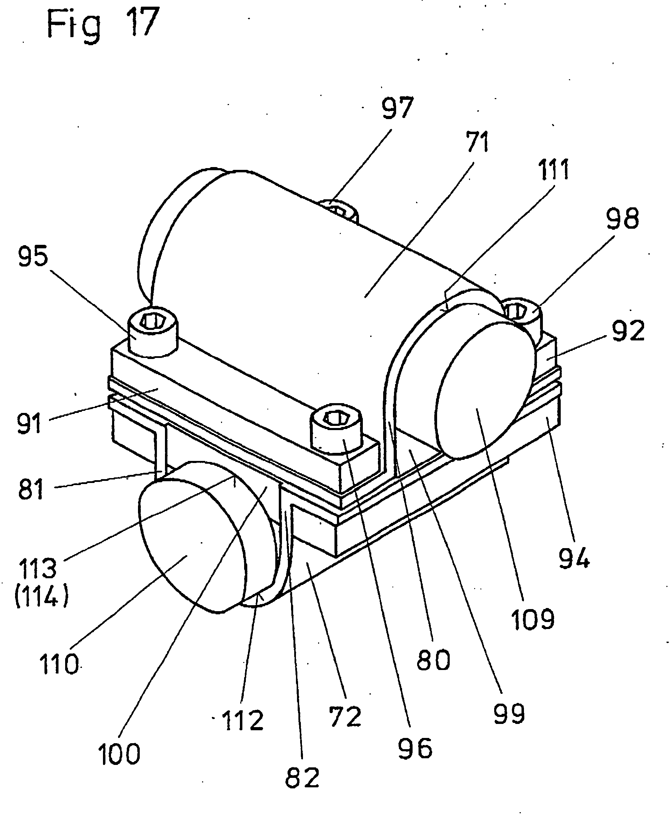

Bei den Ausführungsformen nach den Fig. 16 und 17 ist mit dem Bezugszeichen 71 ein Klemmschellenteil und mit dem Bezugszeichen 72 ein weiteres Klemmschellenteil bezeichnet. Die beiden Klemmschellenteile bestehen bei den dargestellten Ausführungsformen aus einem Faserverbundwerkstoff, vorliegend aus Karbonfasern, die im Auflegeverfahren in einer nicht dargestellten Form in die aus der Zeichnung ersichtliche Form gebracht wurden. Hierzu können mehrere Bahnen von Karbonfasern oder andere Faserverbundwerkstoffe, durch ein geeignetes Harz, das in der Zeichnung nicht besonders dargestellt ist, zu einem festen Körper in einer entsprechenden Form eingebracht sein und z. B. in dieser Form erstarren. Faserverbundwerkstoffe aus Fasermaterial wie zum Beispiel Karbonfasern (hochmodul und/oder hochfest), Glasfasern und Kunststofffasern wie zum Beispiel Aramidfasern, die rein oder in Mischungen mit verschiedenen Fasern verwendet werden, können Faserwinkel, zwischen Null Grad und 90 Grad, wie auch multidirektionale Gewebe mit Faserwinkeln von Null Grad, ± 45 Grad und 90 Grad zur Längsachse der Klemmschellenteile 71 bzw. 72 aufweisen. Die Grundgestalt der Klemmschellenteile 71 und 72 kann zum Beispiel den Klemmschellenteilen 12 und 14 der oben beschriebenen Ausführungsformen entsprechen. Während die Klemmschelleriteile 71 und 72 bei der Ausführungsform nach Fig. 16 in einer unendlichen Anzahl von orthogonal zu ihrer Längsachse orthogonal geführten Querschnitten innen und außen entsprechend dem sie umschließenden Rohr 73 bzw. 74 durch Kreisbögen 75 bzw. 76 sowie 77, 78 begrenzt sind. An diese Kreisbögen 75 bzw. 76 einerseits sowie 77 und 78 andererseits schließen sich jeweils parallel zur Längsachse des zugehörigen Klemmschellenteils 71 bzw. 72 parallel zur Längsachse und parallel zueinander verlaufende Seitenwände 79, 80 bzw. 81 und 82 an. Mit diesen Seitenwänden sind voneinander weggerichtete, leistenförmige sich über die jeweilige Länge des Klemmschellenteils 71 bzw. 72 durchgehend erstreckende Flansche 83, 84 bzw. 85, 86 materialmäßig einstückig verbunden, die im Bereich ihrer Endabschnitte jeweils Durchgangsbohrungen aufweisen, von denen an jedem Klemmschellenteil an gegenüberliegenden Seiten nur jeweils eine mit dem Bezugszeichen 87, 88 bzw. 89, 90 aufweisen. Die jeweils gegenüberliegenden Bohrungen des zugehörigen Flansches 83 bis 86 sind entsprechend ausgebildet, besitzen also gleiche Abmessungen. Jeder der Flansche 83 bis 86 weist also bei der dargestellten Ausführungsform zwei solcher Durchgangsbohrungen auf. Die Übergangsradien zwischen den zugeordneten Seitenwänden 79 bis 82 zu den zugeordneten Flanschen 83 bis 86 brauchen nicht so scharfkantig ausgeführt zu werden, wie dies in der Zeichnung aus Gründen der Vereinfachung darstellt ist. Vielmehr können hier Radien, auch sanfte Übergangsradien, vorhanden sein, um Spannungsanhäufungen in diesen Bereichen zu vermeiden, was auch für die inneren Übergangsbereiche zwischen den Seitenwänden 79 bis 82 und den inneren zu den hier vorgesehenen Flanschen 83 bis 86 gilt.

Jedem der Flansche 83 bis 86 ist je eine Klemmleiste aus einem metallischen Werkstoff, zum Beispiel aus einer Aluminium- oder Manganlegierung, zugeordnet. Es kann aber hier auch eine Kunststoffleiste vorgesehen sein, die aus dem gleichen Werkstoff wie die Klemmschellenteile 71 und 72, zum Beispiel aus einem Faserverbundwerkstoff, insbesondere aus Kohlefasern, bestehen kann. Die Klemmleisten 91 bis 94 weisen im Bereich der Durchgangsbohrungen 87 bis 90 und der übrigen Durchgangsbohrungen jeweils korrespondierende Durchgangsbohrungen auf, wobei die Durchgangsbohrungen der Klemmleisten 91 bis 94 jeweils mit Gewinde versehen sein können, so dass die beiden Klemmschellenteile 71 und 72 und zwischen diesen formmäßig entsprechende Rohre 73 und 74 durch insgesamt nur vier Befestigungsschrauben 95, 96 bzw. 97, 98 miteinander fest, aber lösbar, verbunden werden können. Die Befestigungsschrauben 95 bis 98 sind vorliegend als Innensechskantschrauben ausgebildet.

Mit den Bezugszeichen 99 und 100 sind Inlays bezeichnet, die bei der in Fig. 16 dargestellten Ausführungsform aus einem metallischen Werkstoff, zum Beispiel aus einer Aluminium- oder Magnesiumlegierung, bestehen. Es ist jedoch auch möglich, diese Inlays 99 und 100 ebenfalls aus einem Kunststofffaserverbundwerkstoff, zum Beispiel aus Kohlefasern oder einem anderen Faserverbundwerkstoff, zum Beispiel Glasfaserverbundwerkstoff, herzustellen. Die Kohlefasern können auf einem dünnen Gewebelaminat aufgebracht sein. Durch die Dicke des Gewebelaminats wird der Abstand des Schellenflansches eingestellt. Das gleiche gilt aber auch für die aus der Zeichnung ersichtlichen einstückigen und aus einem metallischen Werkstoff bestehenden Inlays 99 und 100, die an ihren den Rohren 73 und 74 zugekehrten Oberflächenabschnitten eine der Mantelfläche der Rohre 73 und 74 entsprechende Ausnehmung 101 bzw. 102 aufweisen, so dass ein guter Formschluss zu dem zugeordneten Rohr 73 bzw. 74 erzielt wird. Die dieser Ausnehmung 101 bzw. 102 abgekehrte Seitenwand 103 bzw. 104 ist ebenflächig ausgebildet und geht in die beiden parallel zueinander angeordneten Wänden 105, 106, bzw. 107, 108 einstückig über. Die geraden Wände 103 bzw. 104 laufen in der Ebene der jeweils inneren Flanschwände der Flansche 83, 84 bzw. 85, 86, während sich die äußeren Begrenzungen der Wände 105, 106 bzw. 107, 108 an den ihnen zugekehrten Innenwänden der Seitenwände 79, 80 bzw. 81, 82 anlegen. Auf diese Weise stützen sich die Flansche des jeweils anderen Klemmteils, zum Beispiel 71 mit ihren Flanschen 83, 84 jeweils an die Seitenwand 104 des Inlays 100 und die Flansche 85, 86 an die Seitenwand 103 des Inlays 99 ebenflächig und beim Anziehen der Befestigungsschrauben 95 bis 90 ebenflächig an. Die Inlays besitzen eine hohe Biegesteifigkeit in Schellenlängsachse und eine geringere Biegesteifigkeit quer dazu, besonders wenn sie aus Faserverbundmaterial, zum Beispiel Kohlefasern, hergestellt sind.

Bei der Ausführungsform nach Fig. 17 sind für Teile gleicher Funktion die gleichen Bezugszeichen verwendet worden. Im Gegensatz zu der Ausführungsform nach Fig. 16 sind allerdings bei dieser Ausführungsform die Rohre 109 bzw. 110 in orthogonal zu ihrer Längsachse geführten Querschnitten nicht kreisrund, sondern polygonförmig ausgestaltet. Entsprechend sind die mit den Oberflächenbereichen dieser Profilrohre 109 bzw. 110 in Berührung gelangenden Oberflächen 111 bzw. 112 formmäßig polygonförmig angepasst, so dass sich eine formschlüssige Verbindung ergibt. Bei dieser Ausführungsform können in Umfangsrichtung der Rohre 109 und 110 nicht unendlich viele Stellungen, sondern nur entsprechend der Winkelvorgabe (Oberflächengestaltung) der Rohre 109 und 110 eingenommen werden, während in Längsachsrichtung der Polygonrohre 109 und 110 theoretisch eine unendlich große Anzahl von Verstellungen - wie bei der Ausführungsform nach Fig. 16 - möglich ist. Auch die mit den Profilrohren 109 und 110 in Berührung gelangenden Oberflächenabschnitte der Inlays 99 und 100 sind entsprechend formmäßig gestaltet, besitzen also eine ebenfalls polygonförmige Ausnehmung 113 und 114, so dass sich ein guter Formschluss ergibt. Im übrigen ist die Ausgestaltung und Anordnung so, wie dies im Zusammenhang mit Fig. 16 beschrieben wurde.

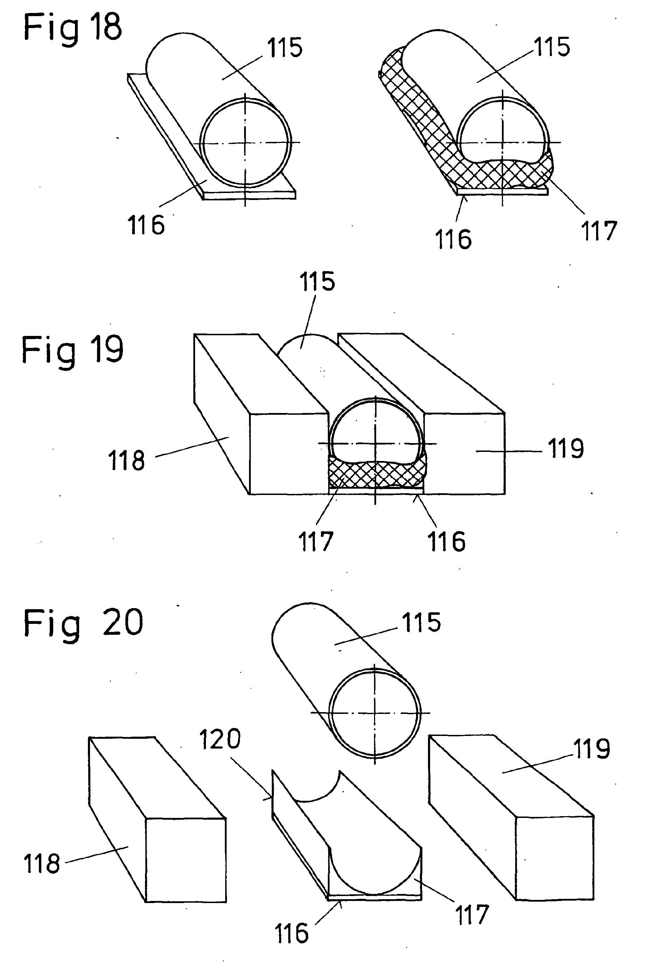

Die Fig. 18 bis 20 zeigen die beispielsweise Herstellung eines Inlays. Mit dem Bezugszeichen 115 ist jeweils ein Formstab von bei der dargestellten Ausführungsform an seiner Außenmantelfläche zylindrischer Grundform dargestellt, der zum Beispiel den Außendurchmesser der später zu klemmenden Rohre 2, 3 aufweisen kann. Selbstverständlich kann auch eine von der Zylinderform abweichende Grundform, zum Beispiel eine elliptische oder polygonförmige Grundform gewählt werden.

Das Bezugszeichen 116 bezeichnet eine CFK-Platte aus zum Beispiel bidirektionalem C-Faserlaminat, während mit 117 unidirektionale C-Fasem (Karbonfasem) bzw. ein gewickelter C-Faser-Strang bezeichnet ist. Die Bezugszeichen 118 und 119 stellen bei der dargestellten Ausführungsform durch planparallele Flächen begrenzte prismatische Körper von bei der dargestellten Ausführung in einem zu ihrer Längsachse orthogonal geführten Querschnitt quadratischer Grundform dar, die auf diametral gegenüberliegenden Seiten den Formstab 115 zwischen sich einschließen und den gewickelten C-Faser-Strang an diesen Stellen flach drücken, so dass sich nach dem Ausformen und stirnseitiger Beschneidung das aus der Anlage ersichtliche Inlay 120 aus bidirektionalem C-Faserlaminat ergibt. Die Vorgehensweise kann also so sein, dass der Formstab 115 mit entsprechendem Durchmesser mit der als Trennfolie wirkenden CFK-Platte versehen wird. An den so präparierten Stab wird mittig und tangential das vorgefertigte CFK-Laminat provisorisch angeklebt und in die beiden sich so ergebenden Zwickel ein getränkter Faserroving (Faserbündel), zum Beispiel als C-Faserroving, gewickelt. Der so gewickelte Körper wird zwischen den beiden als Profilen ausgebildeten prismatischen Formteilen 118 und 119 zusammengedrückt und härtet aus. Selbstverständlich kann die Länge des Formstabes 115 so gewählt werden, dass aus einem Strang aus bidirektionalem C-Faser-Laminat mehrere Inlays auf Länge abgetrennt werden können.

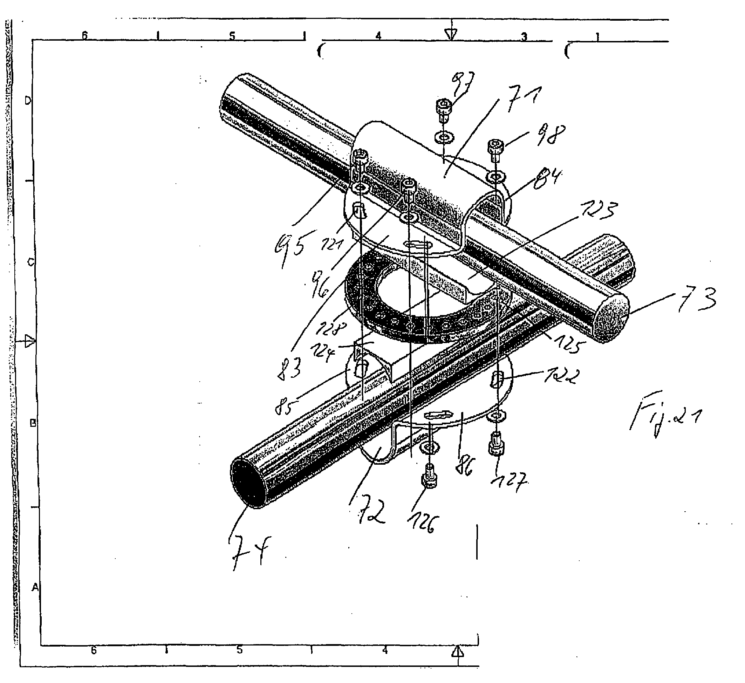

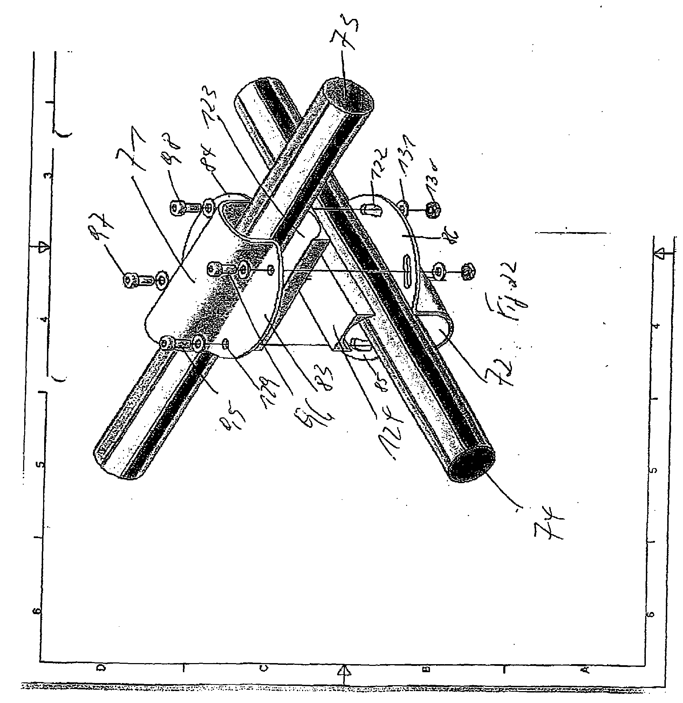

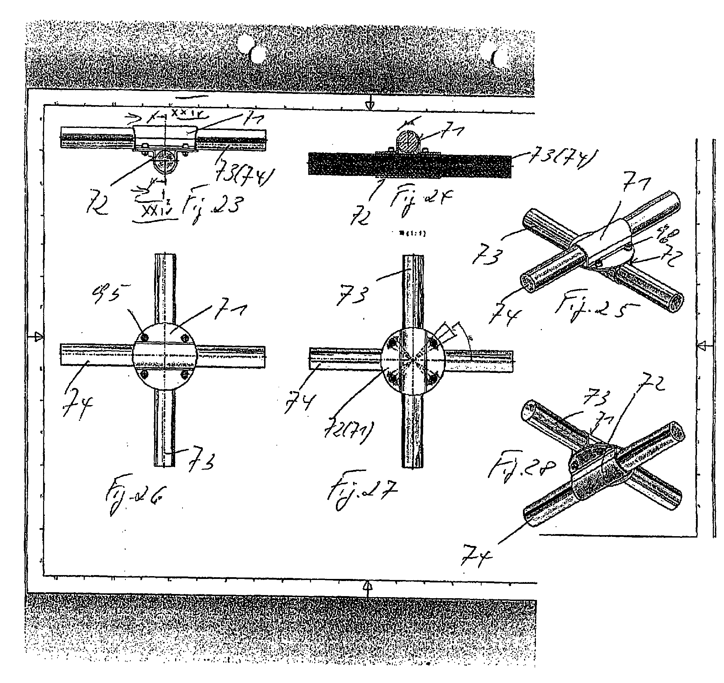

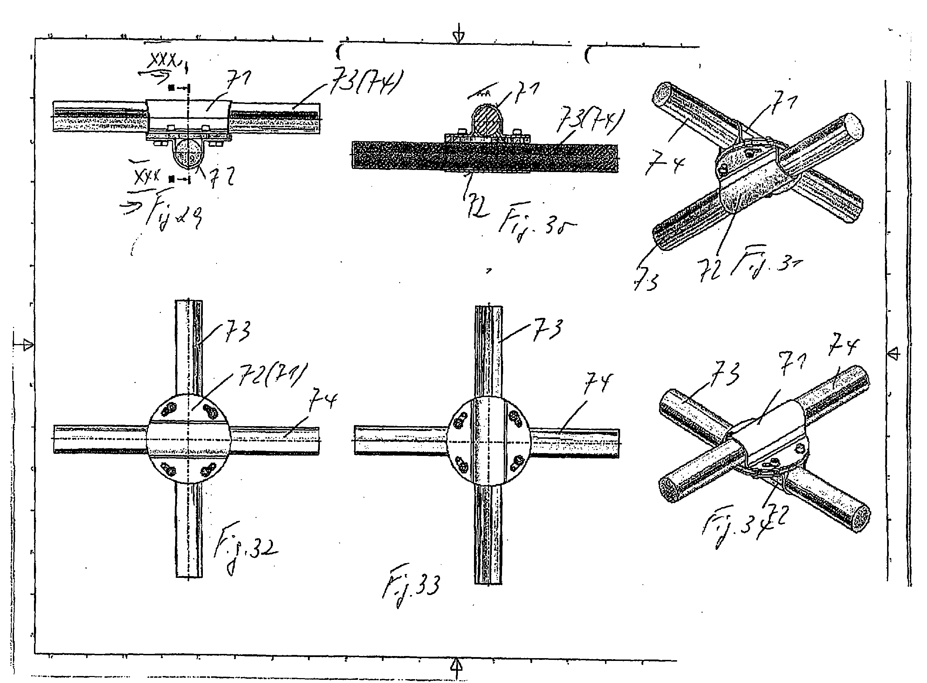

In den Fig. 21 bis 34 sind für Teile gleicher Funktion die gleichen Bezugszeichen verwendet worden. Beispielsweise wurden hier für die Rohre die Bezugszeichen 73 und 74 verwendet.

Bei der Ausführungsform nach den Fig. 21 sowie 29 bis 34 sind die Flansche 83, 84 bzw. 85, 86 jeweils als Kreisbogenabschnitte ausgebildet und weisen gleiche Durchmesser auf, können aber auch unterschiedliche Durchmesser aufweisen. Auf gleichen Durchmessern sind im gleichen Winkelabstand an den Flanschen jeweils zwei bogenförmig gestaltete Langlöcher angeordnet, die in gleichen Winkelabständen und an gleichen Radien ausgebildet sind und die die entsprechenden Flansche 83, 84 bzw. 85, 86 durchsetzen. Aus Gründen der Vereinfachung sind lediglich zwei bogenförmige Langlöcher mit den Bezugszeichen 121 und 122 mit Bezugszeichen versehen worden. Die anderen bogenförmigen Langlöcher sind entsprechend ausgebildet. Wie man erkennt, sind Inlays 123 und 124 (Fig. 21) vorgesehen, die mit ihren Längsachsen quer, vorliegend mit ihren Längsachsen um 90 Grad zueinander verlaufen, aber auch andere Winkelmaße einnehmen können, zum Beispiel spitze Winkel. Die Inlays 123, 124 sind mit ihren geschlossenen Rückseiten gegeneinander gerichtet, während die abgewandten Seiten wiederum der jeweiligen Peripherie des Rohres 73 und 74 entsprechend ausgebildet sind, wie dies zum Beispiel im Zusammenhang mit Fig. 16 beschrieben wurde. Zwischen den einander zugekehrten geschlossenen rückseitigen Wandungen der Inlays 123, 124 ist ein Befestigungsring 125 angeordnet, der über seinen Umfang auf gleichem Teilkreis eine Vielzahl von Durchgangsbohrungen mit Gewinde (nicht dargestellt) aufweist, so dass sowohl von oben (in der Zeichnungsebene gesehen), als auch von unten (gleichfalls in der Zeichnungsebene gesehen) jeweils die mit Gewinde versehenen Befestigungsschrauben 95, 96, 97, 98 sowie entsprechend von unten vier Befestigungsschrauben mit Gewinde in dem Befestigungsring 125 eingeschraubt werden können und dabei durch die bogenförmigen Langlöcher 121 und 122 und die weiteren nicht bezeichneten bogenförmigen Langlöcher hindurchgreifen. Von den unteren Befestigungsschrauben sind lediglich zwei Befestigungsschrauben 126 und 127 mit Bezugszeichen versehen worden. Die diametral gegenüberliegenden Befestigungsschrauben sind aus Gründen der Vereinfachung nicht besonders dargestellt, sind aber entsprechend ausgebildet und angeordnet und durchgreifen die diesen zugeordneten gegenüberliegenden bogenförmigen Langlöcher und sind in entsprechende Schraubbohrungen, zum Beispiel 128 oder jeweils andere Bohrungen, fest, aber lösbar eingeschraubt und verspannen dadurch die Klemmschellen 71 und 72 gegeneinander sowie gegen den Befestigungsring 125 und die Inlays 123, 124. Wie ersichtlich ist, ergibt sich hierdurch eine große Vielfalt von Verstellmöglichkeiten, da jede der Klemmschellen 71 bzw. 72 mit unterschiedlichen Befestigungsbohrungen 128 verschraubt werden können, wobei die bogenförmigen Langlöcher 121, 122 eine weitere Einsiellmöglichkeit ergeben. Auf diese Weise ist eine Vielzahl von Winkeleinstellungen im Raum an dem Gerüstsystem möglich.

Der Befestigungsring 125 kann zum Beispiel aus Karbonfasem, aus Glasfasern, aus Aluminium oder aus einer Magnesiumlegierung bestehen, weist also ebenfalls ein geringes Gewicht auf. Der Außendurchmesser des Befestigungsringes 125 kann dem Außendurchmesser der ringförmig an ihrer Peripherie gestalteten Flansche, zum Beispiel 83, 84, entsprechen.

Die Fig. 29 bis 34 zeigen bei sich rechtwinklig mit ihren Achsen schneidenden Rohren 73, 74 die Anordnung der Klemmschellen mit derartigen Befestigungsringen. Selbstverständlich sind andere Kreuzungswinkel einstellbar. Dies wurde lediglich aus zeichnerischer Vereinfachung nicht dargestellt.

Die Ausführungsform nach Fig. 22 bis 28 unterscheidet sich von der vorbeschriebenen Ausführungsform zunächst dadurch, dass hier zwischen den Inlays 123 und 124 kein Befestigungsring angeordnet ist. Die Befestigungsschrauben 95, 96, 97, 98 greifen jeweils durch Bohrungen 129 der ebenfalls an den Außenseiten kreisrund gestalteten Befestigungsflansche 83, 84 bzw. 85, 86 hindurch und durch bogenförmige Langlöcher 122 sind von unten durch je eine Mutter 130 unter Zwischenschaltung einer Unterlegscheibe 131, ggf. gekontert oder mit Sicherungsscheiben versehen, fest, aber lösbar geklemmt.

Die Fig. 23 bis 28 zeigen dabei aus verschiedenen Blickwinkeln und Schnitten sich kreuzende Rohre 73 und 74. Wie man aus Fig. 27 erkennt, sind auch Schwenkwinkel durch die bogenförmigen Langlöcher 122 möglich. Dadurch lassen sich auch wie bei allen anderen mit den bogenförmigen Langlöcher ausgerüsteten Durchgangsöffnungen Toleranzen ausgleichen.

Klemmschellen und Inlays können aus Karbonfasern oder einem anderen Faserwerkstoff, zum Beispiel Glasfasern oder Aramidwerkstoff hergestellt sein, der in Kunstharz ausgehärtet ist. Die Inlays können ebenfalls aus Kohlefasern, aus einer Aluminium- oder aus einer Magnesiumlegierung bestehen und zum Beispiel nach einem Verfahren gemäß Fig. 18 bis 20 hergestellt sein.

## Patentansprüche

1. Gerüstsystem (1), zur Verwendung im Karosseriebau der Kfz-Industrie, zum Anordnen von Kniehebelspannvorrichtungen (4), Saugvorrichtungen (5), Zentrierdornen (6), Sensoren (7), Schweißvorrichtungen, Clinchvorrichtungen (8), Nietvorrichtungen oder dergleichen, geeignet zum Anordnen an einem Roboterarm, wobei das Gerüstsystem (1) aus zwei oder aus mehreren an ihren Außenmantelflächen zylindrischen oder polygonförmigen Rohren (2, 3, 73, 74, 109, 110) besteht, die durch formmäßig angepasste Klemmschellen (71, 72) kraftschlüssig miteinander in unterschiedlichen Ebenen und/oder Winkeln kuppelbar sind, wobei die Klemmschellen (71, 72) aus zwei oder aus mehreren durch Befestigungsschrauben (95, 96, 97, 98) miteinander zu verbindenden Klemmschellenteilen bestehen, die zwischen sich einen Hohlraum zum Aufnehmen und Klemmen des betreffenden Rohres (73, 74) bzw. (109, 110) aufweisen, **dadurch gekennzeichnet, dass** die Klemmschellen (71, 72) aus einem Faserverbundwerkstoff bestehen, der ein geeignetes Materialsystem aus Kunstharz aufweist.

2. Gerüstsystem nach Anspruch 1, **dadurch gekennzeichnet, dass** die Klemmschellen (71, 72) aus einem aus Kohlefasern bestehenden Faserverbundwerkstoff bestehen, der ein geeignetes Materialsystem aus aushärtbarem Kunstharz aufweist.

3. Gerüstsystem nach Anspruch 1, **dadurch gekennzeichnet, dass** die Klemmschellen (71, 72) aus einem aus Glasfasern bestehenden Faserverbundwerkstoff bestehen, der ein geeignetes Materialsystem aus Kunstharz aufweist.

4. Gerüstsystem nach Anspruch 1, **dadurch gekennzeichnet, dass** die Klemmschellen (71, 72) aus einem aus Kunststofffasern bestehenden Faserverbundwerkstoff bestehen, der ein geeignetes Materialsystem aus Kunstharz aufweist.

5. Gerüstsystem nach Anspruch 1 oder einem der darauffolgenden Ansprüche, **dadurch gekennzeichnet, dass** die Klemmschellenteile (71, 72) aus einem bogenförmigen Abschnitt bestehen, mit parallel zueinander verlaufenden, sich daran anschließenden geraden Seitenwänden (79, 80 bzw. 81, 82), an die sich winklig oder annähernd rechtwinklig davon voneinander abgekehrte, vorzugsweise in der gleichen Ebene verlaufende Flansche (83, 84 bzw. 85, 86) materialmäßig einstückig anschließen, wobei zwischen den parallel zueinander verlaufenden Seitenwänden (79, 80 bzw. 81, 82) ein Inlay-Körper (99 bzw. 100) - einteilig oder z. B. zweiteilig - angeordnet ist, der an seiner den Innenraum zugekehrten Oberflächenseite der Peripherie des kraftschlüssig zu haltenden Rohres (73, 74 bzw. 109, 110) formmäßig angepasst ist und an seinen einander abgekehrten Seitenwänden von Wänden begrenzt ist, die satt an den inneren Seitenwänden der Seitenwände (79, 80 bzw. 81, 82) des betreffenden Klemmschellenteils (71, 72) anliegen und auf der dem Innenraum gegenüberliegenden Seite von einer ebenen Fläche begrenzt ist, die in der gleichen Ebene liegt wie die nach außen gerichteten Seitenwände der Flansche (83, 84 sowie 85, 86).

6. Gerüstsystem nach Anspruch 5, **dadurch gekennzeichnet, dass** das Inlay (99, 100) aus einer Aluminiumlegierung besteht.

7. Gerüstsystem nach Anspruch 5, **dadurch gekennzeichnet, dass** das Inlay (99, 100) aus einer Magnesiumlegierung besteht.

8. Gerüstsystem nach Anspruch 5, **dadurch gekennzeichnet, dass** das Inlay (99, 100) aus einem Faserverbundwerkstoff, insbesondere aus einem aus Kohlefasern, eingebettet in eine Harzmasse, oder aus Kunststofffasern, oder aus Glasfasern, besteht.

9. Gerüstsystem nach Anspruch 5 oder einem der darauffolgenden Ansprüche, **dadurch gekennzeichnet, dass** die einzelnen Inlays zu einer einstückigen Hülse verschmolzen sind.

10. Gerüstsystem nach Anspruch 1 oder einem der darauffolgenden Ansprüche, **dadurch gekennzeichnet, dass** die Flansche (83, 84 bzw. 85, 86) einstückig in die Seitenwände (79, 80 bzw. 81, 82) durch einen sanften Radius übergehen.

11. Gerüstsystem nach Anspruch 1 oder einem der darauffolgenden Ansprüche, **dadurch gekennzeichnet, dass** die Flansche (83, 84 bzw. 85, 86) eine größere Wandstärke als die Seitenwände (79, 80 bzw. 81, 82) aufweisen.

12. Gerüstsystem nach Anspruch 1 oder einem der darauffolgenden Ansprüche, **dadurch gekennzeichnet, dass** die Flansche Durchgangsbohrungen (87, 88, 89, 90) aufweisen und leistenförmig ausgebildet sind und sich über die gesamte Länge der Klemmschellenteile (71, 72) erstrecken und an ihrer Außenseite Klemmleisten (91, 92 bzw. 93, 94) angeordnet sind, die mit den Durchgangsbohrungen (87, 88 bzw. 89, 90) der Flansche (83, 84 bzw. 85, 86) fluchtende Bohrungen aufweisen, durch die Befestigungsschrauben, ggf. mit Gewinde, hindurchgreifen und die zwei oder mehrere auf- und/oder übereinander und/oder nebeneinander angeordnete Klemmschellen funktionell einstückig, aber lösbar miteinander verbinden.

13. Gerüstsystem nach Anspruch 12, **dadurch gekennzeichnet, dass** die Klemmleisten (91, 92 bzw. 93, 94) sich über die gesamte Länge der Flansche (83, 84 bzw. 85, 86) erstrecken und aus einem anderen Werkstoff als die Klemmschellenteile (71, 72), vornehmlich aus einem metallischen Werkstoff wie eine Aluminiumlegierung, Manganlegierung oder auch aus einem Verbundfaserwerkstoff, bestehen.

14. Gerüstsystem nach Anspruch 1 oder einem der darauffolgenden Ansprüche, **dadurch gekennzeichnet, dass** die Klemmleisten (91, 92, 93, 94) mit den Flanschen (83, 84 bzw. 85, 86) dauerhaft einstückig verbunden sind.

15. Gerüstsystem nach Anspruch 1 oder einem der darauffolgenden Ansprüche, **dadurch gekennzeichnet, dass** die Rohre (73, 74 bzw. 109, 110) aus einem Faserverbundwerkstoff bestehen und vorzugsweise in ihrem Innern mit einem geeigneten Kunststoff als Stützwerkstoff aufgeschäumt sind.

16. Gerüstsystem nach Anspruch 15, **dadurch gekennzeichnet, dass** die Rohre (73, 74, 109, 110) aus einem Kohlefaserwerkstoff, eingebettet in einen geeigneten aushärtbaren Harz, bestehen.

17. Gerüstsystem nach Anspruch 16, **dadurch gekennzeichnet, dass** die Rohre (73, 74, 109, 110) aus Glasfasern, eingebettet in einen geeigneten aushärtbaren Harz, bestehen.

18. Gerüstsystem nach Anspruch 1 oder einem der darauffolgenden Ansprüche, **dadurch gekennzeichnet, dass** sowohl für die Klemmschellenteile (71, 72), als auch für die Rohre (73, 74, 109, 110) Faserverbundwerkstoff, insbesondere Kohlefasern, Glasfasern oder sonstige Kunststofffasern, wie Aramidfasern, rein oder in Mischungen mit anderen Fasern bestehen und dass der Faserwinkel zwischen 0 und 90° beträgt.

19. Gerüstsystem nach Anspruch 1 oder einem der darauffolgenden Ansprüche, **dadurch gekennzeichnet, dass** sowohl die Klemmschellenteile (71, 72) bzw. die Rohre (109, 110) aus einem Faserverbundwerkstoff mit multidirektionalem Gewebe mit Faserwinkeln von 0 Grad, +/- 45° oder 90° zur Schellenlängsachse, bestehen.

20. Gerüstsystem nach Anspruch 1 oder einem der darauffolgenden Ansprüche, **dadurch gekennzeichnet, dass** zwei Klemmschellen nur durch vier sie haltende Befestigungsschrauben (95, 96 bzw. 97, 98) lösbar gehalten sind.

21. Gerüstsystem nach Anspruch 1 oder einem der darauffolgenden Ansprüche, **dadurch gekennzeichnet, dass** durch die Dicke des verwendeten Gewebelaminats der Abstand zur Schellenlängsachse einstellbar ist.

22. Gerüstsystem nach Anspruch 1 oder einem der darauffolgenden Ansprüche, **dadurch gekennzeichnet, dass** die im Handauflegeverfahren hergestellten Klemmschellenteile (71, 72) bzw. Rohre (109, 110) in einer entsprechenden Form zum Aushärten bringbar sind.

23. Gerüstsystem nach Anspruch 5 oder einem der darauffolgenden Ansprüche, **dadurch gekennzeichnet, dass** bei sich mit ihren Längsachsen kreuzenden Rohren (2, 3, 73, 74, 109, 110) die Inlays (99, 100) jeweils mit ihrer geschlossenen Rückseite einander zugekehrt sind.

24. Gerüstsystem nach Anspruch 23, **dadurch gekennzeichnet, dass** die Inlays (99, 100) mit ihren Rückseiten flächig aufeinander aufliegen.

25. Gerüstsystem nach Anspruch 24, **dadurch gekennzeichnet, dass** die aneinander angrenzenden Begrenzungen der Rückseiten der Inlays (99, 100) in Ebenen liegen, in denen die Klemmschellenteile (71, 72) mit Flanschen (83, 84, 85, 86) aufeinander liegen.

26. Gerüstsystem nach Anspruch 1 oder einem der darauffolgenden Ansprüche, bei welchem sich die Rohre (2, 3, 73, 74, 109, 110) mit ihren Längsachsen kreuzen, **dadurch gekennzeichnet, dass** mindestens die Flansche (83, 84 bzw. 85, 86) eines Klemmschellenteils (71 bzw. 72) auf gleichen oder unterschiedlichen Radien zwecks Winkelverstellung der Rohre (2, 3, 73, 74, 109, 110) zueinander mit bogenförmigen Langlöchern versehen sind.

27. Gerüstsystem nach Anspruch 23 oder einem der darauffolgenden Ansprüche, **dadurch gekennzeichnet, dass** zwischen den Rückwänden sich kreuzender Inlays (99, 100) ein über seinen Umfang mit vorzugsweise in gleichmäßigen Abständen zueinander angeordnete Bohrungen ausgerüsteter Ring angeordnet ist, in den Befestigungsschrauben eingreifen, z. B. eingeschraubt sind.

28. Gerüstsystem nach Anspruch 27, **dadurch gekennzeichnet, dass** die Flansche (83, 84, 85, 86) der Klemmschellenteile (71, 72) mit bogenförmigen Langlöchern versehen sind, durch die die mit Gewinde versehenen Befestigungsschrauben hindurchgreifen, die in mit Gewinde versehenen Bohrungen des Ringes eingeschraubt sind.

29. Verfahren zum Herstellen von Teilen eines Gerüstsystems (1), zur Verwendung im Karosseriebau der Kfz-Industrie, zum Anordnen von Kniehebelspannvorrichtungen (4), Saugvorrichtungen (5), Zentrierdornen (6), Sensoren (7), Schweißvorrichtungen, Clinchvorrichtungen (8), Nietvorrichtungen oder dergleichen, wobei in einer das betreffende Teil abbildenden Form Faserverbundwerkstoffe in einem Materialsystem aus Kunstharz eingebettet und zu dem Gerüstteil geformt und bis zur endgültigen Formgebung (Aushärten) in der Form belassen werden.

30. Verfahren nach Anspruch 29, **dadurch gekennzeichnet, dass** die Faserverbundwerkstoffe im Handauflegeverfahren eingebettet und zu dem Teil geformt und bis zur endgültigen Formgebung (Aushärten) in der Form belassen werden.

31. Verfahren nach Anspruch 29, **dadurch gekennzeichnet, dass** der aus Kohlefasern bestehende Faserverbundwerkstoff im Handauflegeverfahren eingebettet und zu dem Teil geformt und bis zur endgültigen Formgebung (Aushärten) belassen werden.

32. Verfahren nach Anspruch 29, **dadurch gekennzeichnet, dass** Glasfaserverbundwerkstoffe im Handauflegeverfahren eingebettet und zu dem Teil geformt und bis zur endgültigen Formgebung (Aushärten) belassen werden.

33. Verfahren nach Anspruch 29, **dadurch gekennzeichnet, dass** auf mindestens einer Gewebeschicht oder einem anderem Werkstoff mit Zwischenlagen aus Kunstharz - ggf. in abwechselnder Folge mit Gewebeschichten und einem anderen Faserverbundwerkstoff, zum Beispiel Kohlefasern, - das betreffende Gerüstteil geformt und zum Aushärten gebracht wird.

34. Verfahren nach Anspruch 30 oder einem der darauffolgenden Ansprüche, **dadurch gekennzeichnet, dass** ein Formstab mit entsprechendem Durchmesser z. B. mit einer Trennfolie versehen wird, und dass an dem so präparierten Formstab insbesondere mittig und tangential das vorgefertigte z. B. CFK-Laminat provisorisch angeklebt und um die beiden sich ergebenden Zwickel ein getränkter Faserroving, vorzugsweise ein C-Faserroving, gewickelt wird, und dass der so bewickelte Körper zwischen zwei Profilen auf die Breite des dünnen Laminats zusammengedrückt und hier zum Aushärten gebracht wird, und dass nach dem Aushärten die Trennfolie um den Formstab herum entlang der Mantellinie aufgeschnitten, der Formstab herausgenommen und die Trennfolie vom Verbundwerkstoff abgezogen wird, woraufhin die betreffende Inlay-Hälfte nun als Struktur mit Längserstreckung vorliegt und gegebenenfalls in einzelne Stücke aufgeteilt wird.

## Claims

1. Scaffolding system (1) for use in bodywork assembly in the automotive industry for arranging knuckle-joint tensioning devices (4), sucker devices (5), centring pins (6), sensors (7), welding devices, clinch devices (8), riveting devices etc. suitable for arranging on a robot arm, where the scaffolding system (1) consists of two or more tubes (2, 3, 73, 74, 109, 110) whose outer casing surfaces are cylindrical or polygonal in shape, which can be connected non-positively with one another at various levels and/or angles by means of suitably shaped clamps, where the clamps consist (71, 72) of two or more sections which are joined to one another by means of two or more fixing bolts (95, 96, 97, 98) and which have a cavity between them for receiving and clamping the tube (73, 74) and (109, 110), **characterised in that** the clamps (71, 72) consist of a fibre composite material which has a suitable artificial-resin material system.

2. Scaffolding system according to claim 1, **characterised in that** the clamps (71, 72) consist of a carbon-fibre composite material which has a suitable material system of thermosetting artificial resin.

3. Scaffolding system according to claim 1, **characterised in that** the clamps (71, 72) consist of a glass-fibre composite material which has a suitable material system of artificial resin.

4. Scaffolding system according to claim 1, **characterised in that** the clamps (71, 72) consist of a synthetic-fibre composite material which has a suitable material system of artificial resin.

5. Scaffolding system according to claim 1 or any of the subsequent claims, **characterised in that** the sections of the clamps (71, 72) consist of a curved section with adjoining straight side walls (79, 80 and 81, 82) which are parallel to one another, to which flanges (83, 84 and 85, 86) made of the same piece of material and facing away from one another at an angle or approximately at right angles, and preferably running in the same plane, adjoin, where a single-part or (for example) two-part inlay body (99, 100) is located between the parallel side walls (79, 80 and 81, 82), whose surface facing the interior space fits the outer shape of the tube (73, 74 and 109, 110) to be clamped non-positively, and whose side walls facing away from one another are limited by walls which fit snugly against the interior side walls of the side walls (79, 80 and 81, 82) of the corresponding section of the clamp (71, 72), and, on the side opposite the interior space, are limited by a level surface which lies in the same plane as the outwardly facing side walls of the flanges (83, 84 and 85, 86).

6. Scaffolding system according to claim 5, **characterised in that** the inlay (99, 100) is made of aluminium alloy.

7. Scaffolding system according to claim 5, **characterised in that** the inlay (99, 100) is made of magnesium alloy.

8. Scaffolding system according to claim 5, **characterised in that** the inlay (99, 100) is made of fibre-composite material, especially of carbon fibres embedded in a resin compound, or synthetic fibres or glass fibres.

9. Scaffolding system according to claim 5 or any of the subsequent claims, **characterised in that** the individual inlays are fused into a single-part sleeve.

10. Scaffolding system according to claim 1 or any of the subsequent claims, **characterised in that** the flanges (83, 84 and 85, 86) verge by a gentle radius into the side walls (79, 80 and 81, 82) in one piece.

11. Scaffolding system according to claim 1 or any of the subsequent claims, **characterised in that** the flanges (83, 84 and 85, 86) have a greater wall thickness than the side walls (79, 80 and 81, 82).

12. Scaffolding system according to claim 1 or any of the subsequent claims, **characterised in that** the flanges have through holes (87, 88, 89, 90), are shaped as strips and extend over the whole length of the clamp sections (71, 72), and clamping strips (91, 92 and 93, 94) are located on their outside which have holes aligned with the through holes (87, 88 and 89, 90) of the flanges (83,84 and 85, 86) through which fixing bolts (if necessary with threads) pass and join the two or more clamps located on and/or above and/or beside one another into a single functional part which can be dismantled.

13. Scaffolding system according to claim 12, **characterised in that** the clamping strips (91, 92 and 93, 94) extend over the whole length of the flanges (83, 84 and 85, 86) and consist of a different material than the clamp sections (71, 72), principally of a metallic material such as aluminium alloy, manganese alloy, or of a fibre compound material.

14. Scaffolding system according to claim 1 or any of the subsequent claims, **characterised in that** the clamping strips (91, 92, 93, 94) are joined permanently in one piece to the flanges (83, 84 and 85, 86).

15. Scaffolding system according to claim 1 or any of the subsequent claims, **characterised in that** the tubes (73, 74 and 109, 110) consist of a fibre compound material and are preferably filled with an expandable synthetic foam material for additional support.

16. Scaffolding system according to claim 15, **characterised in that** the tubes (73, 74, 109, 110) consist of a carbon fibre material embedded in a suitable thermosetting resin.

17. Scaffolding system according to claim 16, **characterised in that** the tubes (73, 74, 109, 110) consist of a glass fibre material embedded in a suitable thermosetting resin.

18. Scaffolding system according to claim 1 or any of the subsequent claims, **characterised in that** both the clamp sections (71, 72) and the tubes (73, 74, 109, 110) consist of fibre composite materials, in particular carbon fibre, glass fibre or other synthetic fibres such as aramide fibres, alone or mixed with other fibres, and that the fibre angle is between 0° and 90°.

19. Scaffolding system according to claim 1 or any of the subsequent claims, **characterised in that** both the clamp sections (71, 72) and the tubes (109, 110) consist of a fibre composite material of multi-directional fabric with fibre angles of 0° ± 45° or 90° to the lengthwise axis of the clamp.

20. Scaffolding system according to claim 1 or any of the subsequent claims, **characterised in that** two clamps are held by four releasable fixing bolts only (95, 96 and 97, 98).

21. Scaffolding system according to claim 1 or any of the subsequent claims, **characterised in that** the distance to the lengthwise axis of the clamp can be adjusted by the thickness of the fabric laminate.

22. Scaffolding system according to claim 1 or any of the subsequent claims, **characterised in that** the sections of the clamp (71, 72) and tubes (109, 110) manufactured by the manual application process can be cured in a suitable mould.

23. Scaffolding system according to claim 5 or any of the subsequent claims, **characterised in that** with tubes (2, 3, 73, 74, 109, 110) whose lengthwise axes cross one another, the closed rear sides of the inlays (99, 100) face one another.

24. Scaffolding system according to claim 23, **characterised in that** the rear-side surfaces of the inlays (99, 100) rest against one another.

25. Scaffolding system according to claim 24, **characterised in that** the boundaries adjacent to one another of the rear sides of the inlays (99, 100) are in planes in which the sections of the clamps (71, 72) with flanges (83, 84, 85, 86) lie against one another.

26. Scaffolding system according to claim 1 or any of the subsequent claims according to which the lengthwise axes of the tubes (2, 3, 73, 74, 109, 110) cross one another, **characterised in that** at least the flanges (83, 84 and 85, 86) of a clamp section (71 and 72) have curved slots at the same or different radii to allow the adjustment of the angle of the tubes (2, 3, 73, 74, 109, 110) with reference to one another.

27. Scaffolding system according to claim 23 or any of the subsequent claims, **characterised in that** a ring with holes arranged preferably at equal distances to one another around its circumference, is located between the rear walls of inlays which cross one another (99, 100), into which holes the fixing bolts engage, e.g. by screwing in.

28. Scaffolding system according to claim 27, **characterised in that** the flanges (83, 84, 85, 86) of the clamp sections (71, 72) have curved slots through which the threaded fixing bolts pass and are then screwed into the threaded holes in the ring.

29. Process for manufacturing parts of a scaffolding system (1) for use in bodywork assembly in the automotive industry for arranging knuckle-joint tensioning devices (4), sucker devices (5), centring pins (6), sensors (7), welding devices, clinch devices (8), riveting devices etc. where fibre composite materials are embedded in an artificial-resin material system in a mould for shaping the scaffolding component and then moulded into the desired component and remain in the mould for curing until the final shape is achieved.

30. Process according to claim 29, **characterised in that** the fibre composite materials are embedded by means of the manual application process, shaped into the desired component, and remain in the mould for curing until the final shape is achieved.

31. Process according to claim 29, **characterised in that** the fibre composite material consisting of carbon fibre is embedded by means of the manual application process, shaped into the desired component, and is left (in the mould) for curing until the final shape is achieved.

32. Process according to claim 29, **characterised in that** the glass-fibre composite materials are embedded by means of the manual application process, shaped into the desired component, and are left (in the mould) for curing until the final shape is achieved.

33. Process according to claim 29, **characterised in that** the scaffolding component in question is shaped and cured on at least one layer of fabric or another material with intermediate layers of artificial resin, if necessary in alternating succession using fabric layers and another fibre composite material e.g. carbon fibre.

34. Process according to claim 30 or any of the subsequent claims, **characterised in that** a form rod of suitable diameter receives (e.g.) a separating foil and that the previously prepared laminate (e.g. CFK laminate) is stuck provisionally to the form rod thus prepared, in particular in the centre and tangentially, and an impregnated fibre roving, preferably a C-fibre roving, is wound around the two clocks thus formed, and that the body thus spooled is compressed between two profiles to the width of the thin laminate and cured in this position, and that following curing, the separating foil around the form rod is cut open along the surface line, the form rod extracted, and the separating foil pulled off the composite material, thereby revealing the desired inlay half as a structure with lengthwise extension which can be divided into single parts.

## Revendications

1. Système de châssis (1) à utiliser en construction de carrosseries dans l'industrie automobile, pour agencer des dispositifs de serrage à genouillère (4), dispositifs d'aspiration (5), pointes de centrage (6), capteurs (7), dispositifs de soudage, dispositifs d'assemblage (8), dispositifs de rivetage ou assimilés, adapté pour être agencé contre un bras de robot, sachant que le système de structures (1) se compose de deux ou plusieurs tubes à surfaces enveloppantes extérieures polygonales ou cylindriques (2, 3, 73, 74, 109, 110), couplables entre eux par adhérence des forces à différents niveaux et/ou selon différents angles par des colliers de bridage (71, 72) aux formes adaptées, sachant que lesdits colliers (71, 72) se composent de deux ou plusieurs pièces constitutives des colliers de bridage à relier entre elles par des vis de fixation (95, 96, 97, 98), lesquelles pièces présentent entre elles une cavité destinée à recevoir et brider le tube concerné (73, 74) et/ou (109, 110), **caractérisé en ce que** les colliers de bridage (71, 72) sont en matériau composite contenant des fibres, présentant un système matière approprié fait de résine synthétique.

2. Système de structures selon la revendication 1, **caractérisé en ce que** les colliers de bridage (71, 72) consistent en un matériau composite contenant des fibres de carbone, présentant un système matière approprié fait de résine synthétique durcissable.

3. Système de structures selon la revendication 1, **caractérisé en ce que** les colliers de bridage (71, 72) consistent en un matériau composite contenant des fibres de verre, présentant un système matière approprié fait de résine synthétique.

4. Système de structures selon la revendication 1, **caractérisé en ce que** les colliers de bridage (71, 72) consistent en un matériau composite contenant des fibres synthétiques, présentant un système matière approprié fait de résine synthétique.

5. Système de structures selon la revendication 1, **caractérisé en ce que** les colliers de bridage (71, 72) consistent en une section coudée avec des parois latérales droites (79, 80 et/ou 81, 82) réciproquement parallèles s'y raccordant, parois auxquelles des brides (83, 84 et/ou 85, 86) en matériau monobloc réciproquement opposées et d'un tracé situé sur le même plan se raccordent selon un certain angle ou approximativement perpendiculairement, sachant qu'entre les parois latérales parallèles entre elles (79, 80 et/ou 81,82), un corps en inlay (99 et/ou 100) est agencé en une partie ou par exemple en deux parties et dont la forme du côté superficiel tourné vers le compartiment intérieur est adaptée à la périphérie du tube (73, 74 et/ou 109, 110) à tenir par adhérence des forces, et limité, au niveau de ses parois latérales ne se faisant pas face, par des parois qui appliquent largement sur les parois latérales intérieures des parois latérales (79, 80 et/ou 81,82) de la pièce concernée (71, 72) de collier de bridage, et qui est limité par une surface plane sur le côté situé en face du compartiment intérieur, surface plane située sur le même plan que les parois extérieures, tournées vers l'extérieur, des brides (83, 84 et/ou 85,86).

6. Système de structures selon la revendication 5, **caractérisé en ce que** l'inlay (99, 100) est composé d'un alliage à l'aluminium.

7. Système de structures selon la revendication 5, **caractérisé en ce que** l'inlay (99, 100) est composé d'un alliage au magnésium.

8. Système de structures selon la revendication 5, **caractérisé en ce que** l'inlay (99, 100) consiste en un matériau composite contenant des fibres, en particulier un fait de fibres de carbone noyées dans une pâte de résine, ou de fibres synthétiques ou d'autres fibres de verre.

9. Système de structures selon la revendication 5 ou l'une des revendications suivantes, **caractérisé en ce que** les différents inlays sont fondus en une douille monobloc.

10. Système de structures selon la revendication 1 ou l'une des revendications suivantes, **caractérisé en ce que** les brides (83, 84 et/ou 85, 86) se transforment progressivement et monobloc en parois latérales (79, 80 et/ou 81,82) selon un rayon non serré.

11. Système de structures selon la revendication 1 ou l'une des revendications suivantes, **caractérisé en ce que** les brides (83, 84 et/ou 85, 86) présentent une plus forte épaisseur de parois que les parois latérales (79, 80 et/ou 81, 82).

12. Système de structures selon la revendication 1 ou l'une des revendications suivantes, **caractérisé en ce que** les brides présentent des alésages traversants (87, 88, 89, 90), qu'elles sont configurées en bandeaux et s'étendent sur toute la longueur des pièces (71, 72) de colliers de bridage et **en ce que** des bandeaux de bridage (91, 92 et/ou 93, 94) sont agencés contre leur côté extérieur, et dont des alésages s'alignent sur les alésages traversants (87, 88 et/ou 89, 90) des brides (83, 84 et/ou 85,86), alésages à travers lesquels passent des vis de fixation, le cas échéant avec filetage, reliant ainsi ensemble fonctionnellement, de façon monobloc mais détachable, deux ou plusieurs colliers de bridage situés l'un/les uns sur et/ou au-dessus et/ou à côté de l'autre / des autres.

13. Système de structures selon la revendication 12, **caractérisé en ce que** les bandeaux de bridage (91, 92 et/ou 93,94) s'étendent sur toute la longueur des brides (83, 84 et/ou 85,86) et se composent d'un matériau autre que les pièces (71, 72) de colliers de bridage, de préférence d'un matériau métallique tel qu'un alliage à l'aluminium, un alliage au magnésium ou également d'un matériau composite contenant des fibres.

14. Système de structures selon la revendication 1 ou l'une des revendications suivantes, **caractérisé en ce que** les bandeaux de bridage (91, 92, 93, 94) sont reliés de façon monobloc permanente avec les brides (83, 84 et/ou 85, 86).

15. Système de structures selon la revendication 1 ou l'une des revendications suivantes, **caractérisé en ce que** les tubes (73, 74 et/ou 109, 110) se composent d'un matériau composite contenant des fibres et de préférence à l'intérieur desquels un matériau synthétique a été expansé pour servir de matériau de soutien.

16. Système de structures selon la revendication 15, **caractérisé en ce que** les tubes (73, 74, 109, 110) se composent d'un matériau à base de fibres de carbone noyé dans une résine durcissable appropriée.

17. Système de structures selon la revendication 16, **caractérisé en ce que** les tubes (73, 74, 109, 110) se composent de fibres de verre noyées dans une résine durcissable appropriée.

18. Système de structures selon la revendication 1 ou l'une des revendications suivantes, **caractérisé en ce que** tant les pièces (71, 72) de colliers de serrage que les tube (73, 74, 109, 110) sont en matériau composite contenant des fibres, en particulier des fibres de carbone, fibres de verre ou fibres diverses en matière synthétique telles que les fibres d'aramide, pures ou mélangées à d'autres fibres, et **en ce que** les angles des fibres sont compris entre 0 et 90°.

19. Système de structures selon la revendication 1 ou l'une des revendications suivantes, **caractérisé en ce que** tant les pièces (71, 72) de colliers de serrage que les tubes (109, 110) se composent d'un matériau composite contenant des fibres à textile multidirectionnel, dont l'angle des fibres est de 0 degrés, + 45° ou 90° par rapport à l'axe longitudinal des colliers.

20. Système de structures selon la revendication 1 ou l'une des revendications suivantes, **caractérisé en ce que** deux colliers de bridage sont retenus, de façon détachable, par seulement quatre vis de fixation (95, 96 et/ou 97, 98) les retenant.

21. Système de structures selon la revendication 1 ou l'une des revendications suivantes, **caractérisé en ce qu'**il est possible de régler l'écart par rapport à l'axe longitudinal du collier en jouant sur l'épaisseur du laminé textile utilisé.

22. Système de structures selon la revendication 1 ou l'une des revendications suivantes, **caractérisé en ce que** les pièces (71, 72) de colliers de bridage ou les tubes (109, 110) fabriqués par déposition manuelle peuvent être amenés dans un moule correspondant pour durcir.

23. Système de structures selon la revendication 5 ou l'une des revendications suivantes, **caractérisé en ce que** dans le cas des tubes (2, 3, 73, 74, 109, 110) se croisant par leurs axes longitudinaux, les inlays (99, 100) sont tournés l'un vers l'autre par leur côté dorsal fermé.

24. Système de structures selon la revendication 23, **caractérisé en ce que** les inlays (99, 100) appliquent l'un sur l'autre par les surfaces de leurs dos.

25. Système de structures selon la revendication 24, **caractérisé en ce que** les limitations contiguës des dos des inlays (99, 100) se trouvent sur des plans dans lesquels les pièces (71, 72) de colliers de bridage sont superposées avec des brides (83, 84, 85, 86).

26. Système de structures selon la revendication 1 ou l'une des revendications suivantes, dans lequel les tubes (2, 3, 73, 74, 109, 110) se croisent par leurs axes longitudinaux, **caractérisé en ce qu'**au moins les brides (83, 84 et/ou 85, 86) d'une pièce (71 ou 72) de collier de bridage sont dotées - sur des rayons identiques ou différents dans le but de modifier le réglage angulaire des tubes (2, 3, 73, 74, 109, 110) les uns par rapport aux autres - de trous oblongs coudés.

27. Système de structures selon la revendication 23 ou l'une des revendications suivantes, **caractérisé en ce qu'**entre les parois arrière d'inlays (99, 100) se croisant est agencé un anneau présentant sur sa circonférence des alésages de préférence équidistants, alésages dans lesquels pénètrent les vis de fixation et y sont par exemple vissées.

28. Système de structures selon la revendication 27, **caractérisé en ce que** les brides (83, 84, 85, 86) des pièces (71, 72) composant les colliers de bridage sont dotées de trous oblongs coudés traversés par les vis de fixation dotées de filetage et qui sont vissées dans les alésages de l'anneau dotés d'un filetage.

29. Procédé servant à fabriquer des pièces d'un système de structures (1), à utiliser en construction de carrosseries dans l'industrie automobile, destiné à agencer des dispositifs de serrage à genouillère (4), dispositifs d'aspiration (5), pointes de centrage (6), capteurs (7), dispositifs de soudage, dispositifs d'assemblage (8), dispositifs de rivetage ou assimilés, sachant que dans un moule reproduisant la pièce concernée des matériaux composites contenant des fibres sont noyés dans un système de matière à base de résine synthétique, et formés pour donner la pièce concernée de la structure, et demeurent dans le moule jusqu'à obtention de la forme définitive (durcissement).

30. Procédé selon la revendication 29, **caractérisé en ce que** les matériaux composites contenant des fibres sont noyés selon le procédé de déposition à la main, qu'on leur confère la forme de la pièce et qu'ils demeurent dans le moule jusqu'à obtention de la forme définitive (durcissement).

31. Procédé selon la revendication 29, **caractérisé en ce que** le matériau composite contenant des fibres de carbone est noyé selon le procédé de déposition à la main, qu'on lui confère la forme de la pièce et qu'il demeure dans le moule jusqu'à obtention de la forme définitive (durcissement).

32. Procédé selon la revendication 29, **caractérisé en ce que** les matériaux composites contenant des fibres de verre sont noyés selon le procédé de déposition à la main et qu'on leur confère la forme de la pièce et qu'ils demeurent dans le moule jusqu'à obtention de la forme définitive (durcissement).

33. Procédé selon la revendication 29, **caractérisé en ce que** sur au moins une couche de textile ou sur un autre matériau comportant des couches intermédiaires en résine artificielle - le cas échéant avec une succession alternée de couches textiles et d'un autre matériau composite contenant des fibres (de carbone par exemple) - on confère sa forme à la pièce de la structure et la fait durcir.

34. Procédé selon la revendication 30 ou l'une des revendications suivantes, **caractérisé en ce qu'**une barre de moulage d'un diamètre correspondant est dotée par exemple d'une feuille séparatrice et **en ce que** contre la barre de moulage préparée de la sorte on colle provisoirement, notamment au centre et tangentiellement, le laminé synthétique préfabriqué, par exemple en fibres de carbone, et qu'autour des deux soufflets qui en résultent on enroule un stratifil, de préférence un stratifil en fibres de carbone, et **en ce que** le corps ainsi enroulé est comprimé entre deux profilés sur la largeur du laminé mince et amené ici à durcir, et **en ce qu'**après le durcissement on incise la feuille séparatrice autour de la barre de moulage, le long de la génératrice, on extrait la barre de moulage et détache la feuille séparatrice du matériau composite, ce après quoi on dispose de la moitié concernée de l'inlay sous forme de structure à extension longitudinale et que l'on partage le cas échéant en pièces individuelles.
